**Europäisches Patentamt**

**European Patent Office**

**Office européen des brevets**

(19)

(11) Veröffentlichungsnummer: **0 227 711 B1**

# EUROPÄISCHE PATENTSCHRIFT

(12)

(45) Veröffentlichungstag der Patentschrift:
**09.10.91 Patentblatt 91/41**

(51) Int. Cl.$^5$: **F01N 3/08, F01N 3/00**

(21) Anmeldenummer: **86903252.4**

(22) Anmeldetag: **16.06.86**

(86) Internationale Anmeldenummer:
**PCT/DE86/00253**

(87) Internationale Veröffentlichungsnummer:
**WO 86/07412 18.12.86 Gazette 86/27**

(54) **Verfahren und Vorrichtung zur Beseitigung von Schadstoffen im Abgas von Verbrennungskraftmaschinen.**

(30) Priorität: **14.06.85 DE 3521462**

(43) Veröffentlichungstag der Anmeldung:
**08.07.87 Patentblatt 87/28**

(45) Bekanntmachung des Hinweises auf die Patenterteilung:
**09.10.91 Patentblatt 91/41**

(84) Benannte Vertragsstaaten:
**AT BE CH DE FR GB IT LI LU NL SE**

(56) Entgegenhaltungen:
**WO-A-85/05405**
**DE-A- 1 442 790**
**DE-A- 2 136 265**
**DE-A- 2 227 949**

(56) Entgegenhaltungen:
**DE-B- 1 751 369**
**FR-A- 2 239 782**
**US-A- 4 076 606**
**Patents Abstracts of Japan, vol. 7, No. 163**
**(M-229) (1308), 16 July 1983**

(73) Patentinhaber: **BRITZ, Günter J.**
**Gotenstrasse 12**
**W-5480 Remagen 1 (DE)**

(72) Erfinder: **BRITZ, Günter J.**
**Gotenstrasse 12**
**W-5480 Remagen 1 (DE)**

(74) Vertreter: **Schüler, Helga Eva-Marie**
**Patentanwalt Dr. rer. nat. Helga Schüler**
**Kaiserstrasse 69**
**W-6000 Frankfurt 1 (DE)**

## Beschreibung

Die Erfindung betrifft ein Verfahren zur Beseitigung von Schadstoffen im Abgas von Verbrennungskraftmaschinen, bei dem das Abgas aus den Verbrennungsräumen des Motors über eine kurze Wegstrecke in einen oder mehrere Nachbehandlungsräume geleitet wird, wo Schadstoffe durch Nachreaktionen in unschädliche Stoffe umgewandelt werden, und bei dem die Energie der Knall- oder Stoßwellen aus dem Motor zur Erhöhung des Energieinhaltes des Abgases verwendet wird. Die Erfindung betrifft weiterhin eine Vorrichtung zur Durchführung dieses Verfahrens.

Durch die Erfindung soll eine Schadgasbeseitigung bei Verbrennungskraftmaschinen mit rotierender Ausgangswelle durch additive Wechselwirkungen auf Elementarteilchen und elektrische Ladungen der Abgasemissionen in einem dem Motor nachgeschalteten, durch Mikroprozessoren gesteuerten hybriden Verfahren mit Bildung eines induktiv gekoppelten quasineutralen Plasmas durchgeführt werden. Das Verfahren kann auf alle Verbrennungskraftmaschinen als Energiewandler mit rotierender Ausgangswelle in verschiedenen Arbeitsverfahren angewendet werden, bezieht sich also auf alle Kraftmaschinen, bei denen durch unmittelbar im Zylinder oder in einer Brennkammer stattfindenden raschen Verbrennung eines Kraftstoffluftgemisches mechanische Arbeit gewonnen wird. Die Arbeitsweise dieser Verbrennungskraftmaschinen beinhaltet üblicherweise einen periodischen Verbrennungsablauf mit entsprechenden Energiezustandsänderungen.

Das Verfahren nach der Erfindung ist für die Behandlung des periodischen Schadgasausstoßes im kontinuierlichen Arbeitsgang konzipiert, wobei aber der gesamte motorische Umsatz umfaßt wird, also Abgas und Lärm in einer einheitlichen Behandlungsprozedur berücksichtigt werden, damit der thermodynamische Kreisprozeß der Kraftmaschine durch nachträgliche volle Entropieerzeugung im Abgas geschlossen wird. Mit anderen Worten, der gesamte energetisch-chemische Umsatz soll irreversibel auf eine die Umwelt nicht mehr beeinträchtigende Größe reduziert werden.

Seit dem 1. deutschen Umweltgesetz (1971) gab es viele Ansätze, um generell die Abgase bei Hubkolbenmotoren zu vermindern, wobei zum einen Eingriffe in das mechanische Regelwerk vorgenommen wurden und zum anderen die Kraftmaschine an ein Behandlungssystem angekoppelt wurde oder in ein solches integriert wurde. Alle Maßnahmen zusammengenommen haben nur zu Teilerfolgen geführt, was sowohl für die Abgasreduzierung als auch für die anteilige Verminderung der Schadgase gilt. Der gesamte Anteil der Schadgase durch Erzeuger im Straßenverkehr liegt noch viel zu hoch, insbesondere bei den Stickoxiden mit einem Anteil von ca. 52 %.

Die bisher erprobten Methoden haben nicht den Beweis erbracht, daß mit ihnen eine annähernd restlose Lösung der Schadgasprobleme bei Motoren mit innerer Verbrennung erreicht werden kann. Die Gründe dafür liegen bei zahlreichen technischen Kompromissen, die im folgenden kurz dargelegt werden.

Alle Motore mit innerer Verbrennung haben in der Wirkungsgradkette 1) größere Verluste, die irreversibel sind und im NUTZWIRKUNGSGRAD erfaßt sind.Konsequenz: Die Summe aller Verluste läßt ein optimale Umwandlung des zugeführten Kraftstoffes nicht zu. Der Faktor BRENNSTOFFUMSETZUNG gibt dabei die Verbrennungsgüte an, die Schadstoffhöhe und Abgasqualität bestimmt, wobei in keinem Betriebszustand eine vollkommene Verbrennung erreichbar ist. 2) Der Brennstoffumsetzungsgrad ist unvollkommen, weil die Zeit zum Endausbrand bei den hohen Drehzahlen und Lastwechseln nicht ausreicht. Der GÜTEGRAD enthält innere Verluste im Hoch-und Niederdruckbereich. Der mechanische WIRKUNGSGRAD weist alle Reibungsverluste auf. Dabei steht die Baugröße heutiger Motore in direktem Zusammenhang mit der Kurbelwellendrehzahl und dem thermischen WIRKUNGSGRAD.Allgemein gilt, daß mit abnehmender Baugröße die Drehzahl und der thermische Wirkungsgrad steigt. Zunehmende Drehzahl bedeutet aber in der Regel Verkürzung der für eine optimale Verbrennung(Energiewandlung) benötigten Zeit.

Ebenso wirkt das entwickelte Verhältnis zwischen Kolbenhub und Kolbendurchmesser einer Wirkungsgradverbesserung in diesem Zusammenhang entgegen.

Bei allen Verbrennungskraftmaschinen liegt offener Gaswechsel vor und offene Prozeßführung.Bekanntermaßen besagt nun der 2.thermodynamische Lehrsatz,daß sich in offenen Systemen die ENTROPIE vergrößert oder höchstens gleich bleiben kann. Auf den GLEICHRAUMPROZESS übertragen bedeutet das, daß eine restlose -und damit schadgasfreie -Umsetzung der potentiellen chemischen Energie nur durch Erzeugung totaler Entropie im Abgas erreicht werden kann. Konsequenz: Mit keiner einzelnen oder synergetischen Maßnahme auf der Seite des mechanischen Regelsystems in Verbindung mit dem kolbenmotorischen Gleichraumprozeß ist eine Abgas-bzw. Schadgasverminderung von nahezu restloser Größe erreichbar.

Das zeigt auch der Stand der Technik als volumenmäßige Größe in der letzten Entwicklungsdekade zur

1) Kraftfahrtechn.Taschenbuch,BOSCH, 1985,19.Aufl.S.286
2) wie 1)

Steigerung des Verhältinisses ENERGIE/NUTZWIRKUNGSGRAD durch schrittweise Verbesserungen zur Verringerung strömungstechnischer, thermodynamischer und mechanischer Verluste, mit zusätzlichem Einsatz elektronischer Elemente. Es wurde zwar in 15 Jahren ein deutlicher Kraftstoff-und Abgasrückgang erzielt, 3) mit Verringerung der CO-und HC-Werte, aber drastischer Steigerung der Stickoxide und des Rußes u.a., durch Magerkonzeption und hohe Verdichtungen, verursacht als Kompromiß, zur Kompensation verringerter Flammfähigkeit und Flammengeschwindigkeit, die mit Abmagerung eintreten.

Es erfolgte nur eine Verlagerung negativer Entropieanteile der ursächlichen Gleichraumprozeße.Die Gesamtentropie hat negativ sogar zugenommen.Eine zusammenfassende Kritik dieser Entwicklung bietet z.B. die sachverständige Motorfachwelt im knappen Jahresumfang 1983. 1)

Diese Kritik bemängelt deutlich den Zielkonflickt zwischen Senkung der KfZ-Emissionen im Verhältnis Energie/Nutzwirkungsgrad in Verbindung mit den gängigen Abgasbehandlungsmethoden. Nun ist auch zu bedenken, daß allein das in der einstufigen Kolbenmaschine nicht optimal erreichbare maximale DEHNUNGSMOMENT der Gase einen energetischen Verlust von ca 13 % bewirkt. ( Vgl.Verbrennungskraftmaschinen, Thermodynamik und versuchsmäßige Grundlagen,Fritz A.F.Schmidt,4.Aufl.Berlin,1967,S.36) Die rein analytisch-im Gegensatz zu synthetisch - vorgehende technische Problembehandlung und ihre Folgewirkungen im verbrennungsmotorischen Bereich,findet in der Problembehandlung Schadgas und Lärm eine Fortsetzung der Vielfalt von Kompromissen. Denn der derzeitige Stand der Technik als Behandlungsgüte der Problemfelder KfZ-Emissionen Gase + Lärm wird einerseits präsentiert durch ebenfalls analytische Technikausübung-d.h. jedes Problem wird mit getrennten technischen Mitteln behandelt,andererseits durch eine Vielzahl uneinheitlicher Verfahren mit entsprechend unterschiedlichem Wirkungsgrad; dem unterwirft sich ebenso die Ordnungspolitik durch einen breit gefächerten Maßnahmenkatalog,obwohl URSACHE und WIRKUNG der verbrennungsmotorischen Emissionen in ihrer unzertrennlichen Verkettung sich als eine in sich geschlossene Natureinheit darstellen, die als solche auch zubehandeln ist.

Derzeit werden im wesentlichen zur Entgiftung der Motorenabgase folgende Verfahren angewandt:

a) Entgiftung durch Oxidation an Einbettkatalysatoren

b) Entgiftung durch Oxidation +Reduktion an Zweibettkatalysatoren

c) Entgiftung durch multifunktionale Drei-Wege-Katalysatoren mit LAMBDA-SONDE,

d) Entgiftung durch thermische Oxidation in Nachbrennern mit offener Zündflamme, (vgl.VDI-Nach.Nr.24/15.Juni1984 - Synchron-Reaktor)

e) Entgiftung durch Oxidation in einem Ultraschallfeld,

f) Entgiftung durch Abgasrückführungssysteme. (Vgl.z.B. Bericht in ADAC-Motorwelt,Heft o4/1986,Seite 50-51)

Die Hauptnachteile der Systeme unter a),b),d),e),f) liegen darin, daß diese mit Zusatzluft gespeist werden müssen, die Stickoxide nichtausreichend anfassen, den Nutzwirkungsgrad z.T. verringern und auch noch zusätzliche Schadstoffe bilden,z.B. Säurekomponenten.Hinzu kommt bei den meisten Verfahren der Kraftstoffmehrverbrauch.

Eine deutliche Termenanregung zur Erreichung der Bindungsenergie auch für Stickoxide($NO_x$) besitzt zwar der Drei-Wege-Katalysator.Dieser besitzt aber auch -außer den speziellen Nachteilen aller Katalysatoren, nämlich die Gefahr der Säurebildung 2) und daß stärkere Gemischbildungsschwankungen nicht schnell genug verarbeitet werden- zusätzliche Nachteile: Das Toleranzfenster der Gemischaufbereitung ist zu eng.Durch Lambda 1 entstehen Leistungsausbeutungsverminderungen , da eine "saubere Verbrennung" 1) in den wechselnden Vollast-und Teilastbereichen d.h., bester Wirkungsgrad bei Wechsellastzuständen, nur durch Laststeuerung über die in den Zylinder gelangende Gemischmenge erfolgen kann (Quantitätssteuerung), aber Vergaser -und Einspritzmotoren diese Forderung nur unterschiedlich gut realisieren.Sie zeigen im Motorkennfeld gegensätzliches Leistungsverhalten, wobei die Einspritztechnik eine durchschnittliche Mehrausbeute von ca 10 % erbringt. Diese Differenz ist mit der Lambda-Sondenregelung nicht erfaßbar.

Weiterhin verlangen Katalysatoren z.B. aus Platin völlige Enthaltsamkeit von "Bleibenzin".Dennoch werden solche Katalysatorgifte gesetzlich zulässig mit Anteilen von 150 mg bzw. für "bleifreie" Benzine mit 10 mg/l angeboten.

Erst nach ca 15-2o Minuten und etwa 900°C erreicht der Katalysator seine volle Wirkung. Für Garagen,

3) VDI nachrichten Nr.21,22 und 23/27.5.-08.6.1983

1) VDI-Nachrichten Nr.21/27.Mai83 Seite 1

VDI-Nachrichten Nr,22/03.Juni 83, Seite 10

VDI-Nachrichten Nr.23/o8.Juni 83, Seite 12

VDI-Nachrichten Nr.24/15.Juni 83, Seite 20

2) Lehrbuch der anorg.u.allgem.Chemie,Dr.Zander u.Dr.Spandau, 5.Aufl.,Springer-Verlag,Berlin,S.142

1) Kraftfahrtechn. Taschenbuch, BOSCH, 1985, 19.Aufl.S.213

Staus in Ballungsgebieten u.a. ist keine schnelle Entlastung gegeben. Der Grunddafür,daß der Katalysator mit Lambda-Sonde auch nur etwa 75% Stickoxide erfaßt (vgl. VDI-Nachr. Nr.22/o3.Juni1983-Seite 10),liegt darin, daß dieser nur die Kinetik der Einstellung des Gleichgewichts beeinflußen kann. Bei modernen Motoren ist daher die kritische Sättigungsgrenze schnell erreicht. So wundert nicht, daß Maßnahmen bedeutender Autobauer damit im Zusammenhang stehen.- (Vgl. Wirtschaftswoche Nr.31 vom 27.o7.84,Seite 54-55, die als kritisch anzusehen sind.

Der im VDI-Dokument Nr.23 vom o8.Juni 84 erwähnte Trend zum Nachbrenner, zeigt sich u.a. in einem deutschen Verfahren (vgl. auch hierzu VDI-Nach.Nr.24/vom 15.Juni84-Synchron-Reaktor).

Deutsche Anmeldung: P 3427546 0 sowie neue Anmeldung (etwa im Oktober 1985) unter der Bezeichnung: "Als Kolbenmotor (Hub-oder Rotationskolben) ausgeführte Brennkraftmaschine.Fachbezeichnung:Synchron-Reaktor.

Das System weist folgende Nachteile auf: Es arbeitet im Warmbetrieb und bei allen Lastzuständen praktisch mit Magerkonzeption,d.h. mit mehr oder weniger Zuführung von Frischluft für die Nachverbrennung.

Zur Erreichung der Flammfähigkeit der Abgase ist daher das System mit einem "Flammenzündrohr" ausgestattet, mit dem Stahlkammer-Innenwandspektrum "kirschrotglut" - also etwa mit 850 °C Temperatur- in das die heißen Motorabgase hineinlaufen.

Infolge mehrfach verwinkelter Brennkammersterometrie, erfahren zylindrische Schallwellen - nämlich aperiodische Knallwellen +Stoßwellenanteile - in der außerdem mit Remissionsgüte ausgeführten Brennkammereine starke Streuung und echte Absorption, so daß bei hoher kinetischer Arbeit des Abgasmediums, eine thermisch gleichbleibend hohe Umgebungstemperatur in Verbindung mit Magerbetrieb eine überwiegend exotherme Reaktion bewirkt wird.

Der konstantierte Nachteil aller oxidativer Entgiftungsverfahren mit rein exothermer Termenanregung gilt auch für das Synchron-Reaktor-System (vgl. bitte Seite 3, letzter Absatz).

$NO_x$ kann zwar grundsätzlich auch thermisch zersetzt werden.Dies ist aus Untersuchungen bekannt, bei denen $NO_x$-Konzentrationen in Helium ! PULSFLAMMEN ausgesetzt wurden, wobei diese mit unterschiedlichen Kraftstoff-Luftverhältnissen erzeugt wurden.Es erfolgte hierbei Dissoziation,wobei $O_2$-Radikale durch Reaktion mit $NO_x$ die bildung von $N_2$-Radikalen und $O_2$ bewirken.Bei sehr fettem Gemisch nur werden $N_2$-Radikale von HC-Molekülen abgefangen.bei höheren $O_2$-Konzentratioen erfolgt Rekombination von $NO_x$ aus $N_2$-Radikalen und $O_2$. Konsequenz: Bei sehr fettem Gemisch erfolgt geringfügige Verminderung von $NO_x$.Bei Magerkonzeption tritt in Bezug auf NO-Eliminierung kein Netto-Effekt ein.

Das als "Hubkolbenmotor" im Oktober 1984 neu angemeldete Verfahren weist als mit dem Motor integriertes Synchron-Reaktor-Verfahren dieselben unveränderten Kricerien auf,obwohl eine auf mittlere Brennkammertemperatur zwischen 500°C und 1000°C geänderte Reaktionsabstimmung das System kennzeichnet. Dadurch wird nur die Dissoziationsgeschwindigkeit verringert, ebenso aber auch die Flammenzündfähigkeit und Flammengeschwindigkeit.

Die Gesamtkriterien weisen das Synchron-Reaktor-System eindeutig als thermisches OXIDATIONS-Nachbehandlungssystem aus, mit deutlicher CO-und HC-Verminderung, aber ungenügender Erfassung der Stickoxide(NO),da die im System angelegten Wirkungen nicht die Gleichgewichtslage der NO-Moleküle verändern,vielmehr nur die Geschwindigkeit der Einstellung des Gleichgewichts(die Kinetik), so daß keine Redoxreaktionen genügender Umsätze -zumal bei den hohen Strömungsgeschwindigkeiten des Brennkammerdurchsatzes -zur deutlichen Verringerung von NO-Anteilen führen können.

Seit Jahren werden mit großem Aufwand Verfahrensansätze zür Verbesserung des Verhältnisses Energie/Nutzwirkungsgrad durch Neuentwicklungen betrieben: Im Gespräch sind der MAGERMOTOR (das sogen.Schichtladeverfahren) sowie Abschaltmethoden von Teilfunktionen, wie Kraftstoffabschaltung,Ventilabschaltung,Zylinderabschaltung und Drehzahlabsenkungen. 1)

Alle diese Lösungen berühren aber mindesten in einer Weise die bekannten Probleme und die Grenzen der Verbrennung, der Leitstungsausbeute und der Wirtschaftlichkeit, der Materialprobleme und die Erweiterung der Teilevielfalt im mechanischen und elektronischen Regelwerk. Dazu muß bemerkt werden -gerade im Hinblick auf moderne Erkenntnisse additiver Reaktorwirkprinzipien- daß die Lösung der Abgas-bzw. Schadgasprobleme nicht auf der technisch-materiellen Seite liegen kann, vielmehr nur auf der Seite der ENERGIE-Verhältnisse.

Deshalb bedeuten die vorerwähnten Verfahren-sollten sie zum Einsatz kommen- lediglich eine Erweiterung der "Spielarten" bisheriger Kompromißtechniken. Denn: Wer versucht, die verbrennungsmotorische Potentialdifferenz nur zur zusätzlichen Leistungsabgabe an ein noch weiter verzweigtes NIEDRIGTEMPERA-

1) Kraftfahrtech.Taschenbuch,BOSCH,1985,19.Aufl.,S.290/297 und "Die Welt" vom 06.08.1984 -"Alle reden vom Abgas.....

TURVERHÄLTNIS = zusätzliche mechanische Arbeit abzugeben, ist von vornherein zur nicht ausreichenden Schadgas- Verminderung verurteilt. Der Grund liegt in den Energieerhaltungsgesetzen, hier der mechanischen Energieerhaltung,d.h., bei allen bisher angezeigten Verbesserungstechniken, 2) kann immer nur berücksichtigung der mechanischen WÄRMEÄQUIVALENZ erfolgen.Hier wird immer nur das Verhältnis ENERGIE/NUTZWIRKUNGSGRAD allein berührt, aber ohne wesentlichen Einfluß auf das positive ENTROPIEVERHÄLTNIS.d.h., ENTROPIEZUNAHME durch Zunahme der INNEREN ENERGIE erfolgt hierbei nicht. Das betrifft auch alle Koppelungen verschiedener Antriebsquellen-und Systeme.

Konsequenz: Nach modernen Erkenntnissen der Physik drängt alle unveränderte ENERGIESTRUKTUR - verbessert man nur die materielle Struktur- in die ursprünglichen(Kompromiß-) Verhältnisse zurück. Beispiel: Abnahme der Schadgasanteile KWST und CO,doch Zunahme von $NO_x$, Ruß und Aldehyde während der Technikverbesserungen der letzten 15 Jahre.

Damitlag -bezogen auf das erfindungsgemäße Verfahren -die Aufgabe vor,in einer vollkommenen energetischen Kettenreaktion, nachmotorisch die rein energetischen Strukturen der primären potentiellen Energieträger(hier im Abgas) zu verändern,so, daß Gleichgewicht in den Wechselbeziehungen zwischen ENERGIE und MATERIE eintritt. D.h., optimaler Zustand des Verhältnisses Energie/Nutzwirkungsgrad bei gleichzeitiger Schadstoffreiheit im Abgas,dadurch, daß im gegenständlichen Abgasverhältnis die naturgesetzlich richtige Kopplung der zusammenhängenden **mechanischen + elektrischen WÄRMEÄQUIVALENZ** erfolgt.

Die Doppelnatur aller atomaren System : MASSE = ENERGIE erfordert ein Absehen von einseitigen Lösungen nach der obigen Prämisse.Denn die Folge diese unzertrennbaren Wechselzusammenhänge ist doch die - daß von der energetischen Struktur des Atoms her, seine materielle Form-damit auch die chemische Wirkungseite-vollautomatisch zu ändern ist:Schadgasumlagerung durch ursächliche WECHSELWIRKUNGEN,d.h. konkret mit Hilfe physikalischer additiver Wechselwirkungskräfte.

Diese Grundüberlegungen führten zur technischen Ausgestaltunb des erfindungsgemäßen Verfahrens: Für die konstruktive Aufgabe der Mittelwahl war die Erkenntnis der Physik maßgebend, daß, falls die Elementarteilchen und ihre Wechselwirkungen grundlegend sind, die Schadstoffprobleme als eine gestörte Wechselwirkung der Elementarteilchen und ihrer elektrischen Ladungen aufzufassen sind, um das Problem der technischen Erzeugung von Schadgasen zu lösen.

Damit war die Aufgabe bestimmt, in die Ursache unvollkommener chemischer Wirkketten - wie bei der Thermodynamik von Motoren mit innerer Verbrennung- einen vollen Ausgleich zu bringen durch Induzierung additiver physikalischer Wechselwirkungen in die reagierenden Abgase.

Physikalische Wechselwirkungen erklären sich als elektromagnetische Kräfte auf LADUNGEN und STRÖME und sie werden durch Ladungen und Ströme hervorgerufen.Da Atome geladene Elektronen und Protonen enthalten, sind alle Kräfte zwischen den Atomen-hier gilt es insbesonders den Sauerstoff in den Wirkungsketten wegen seines besonderen SPINS zu erwähnenelektromagnetischer Art.Da gewöhnliche Materie-wie Gase- sich aus Atomen(und Molekülen) zusammensetzen, sind die zwischen ihnen wirkenden Kräfte elektromagnetischer Art.

Die Thermodynamik reagierender Gase von Motoren-als reale Körper - haben MASSE, IMPULS,ENERGIE,GESCHWINDIGKEIT und BESCLEUNIGUNG. Damit kann die Aufgabe, den Schadstpffkreis zu durchbrechen, auch so definiert werden, daß energelische Ergänzungspotentiale additiver dynamischer Wechselwirkungen in die physikalischen Größen zu bringen sind, um zeit- und wirkungsmäßig maximale positive Abgasentropie zu bewirken. Diese Aufgabe als Entropieproblem der Kraftmaschine mit innerer Verbrennung ist nicht analytisch auf Teilprobleme oder Kompromisse bezogen, sondern bezieht die motorischen Emissionen in die Gesamtbilanz mit ein. Ein Parameter für die Beurteilung zur Optimierung ist dabei

$$E = \frac{\text{umgesetzte mechanische + elektromagnetische Gasarbeit}}{\text{zugegebene Wärmemeng}}$$

Das bedeutet, daß die Verbrennungskraftmaschine in Verbindung mit einem additiven Reaktionsprinzip nach dem Stufenprinzip der Natur "Produktion - Verbrauch - Zerfall" arbeiten soll.

Nach dem Entropiegesetz der Natur soll bei dem erfindungsgemäßen Verfahren innerhalb des thermodynamischen Kreislaufs der Kraftmaschine ein Ergänzungspotential geschaffen werden, durch das die Schadstoffe in naturkonforme Stoffe umgesetzt werden und zugleich der Lärmpegel-erniedrigt wird. In bezug auf die Wirtschaftlichkeit sollen zumindest die gleichen Resultate in der Wirksamkeit erzielt werden wie mit Drei-Wege-Katalysatoren, aber es sollen keine Kompromisse bezüglich des Dauerwirkungsgrades und der Kraftstoffinhalte eingegangen werden, sondern es soll vielmehr noch eine entscheidende Verbesserung der Abgasreinigung in der Höhe und dem Dauerwirkungsgrad erzielt werden, insbesondere für NO zwecks Unterbindung der Schadstoffkette HC - CO - $NO_x$. Es sollen auch keine Kompromisse eingegangen werden in bezug auf bereits bewährte Kriterien des Verbrennungsmotors, also im Verhältnis Energie/Nutzwirkungsgrad und in

2) "spezial AUTOMOBILTECHNIK", Wirtschaftswoche vom 02.05.86, S.80-81

bezug auf allgemein und zweckmäßig bestehende bisherige Freiheitsgrade des Systems KfZ mit rotierender Ausgangswelle. Außerdem soll die Vielzahl uneinheitlicher und ungleich wirksamer Abgasentgiftungsverfahren verringert werden. Auch soll die Lagerhaltung und die Ersatzteilbeschaffung vereinfacht werden und die administrative Vorgabenvielfalt in den Bereichen der Ordnungspolitik z.B. auf ein langfristig einheitliches, voll wirksames Verfahren vereinfacht werden, indem die Herstellung der benötigten Teile selbst relativ billig durch Massenproduktion in allen Industrieländern ist. Über allem steht ferner ein weiträumiger ökologischer Nutzen.

Beseitigung von Schadstoffen im Abgas von Verbrennungskraftmaschinen durch Nachbehandlung des Abgases gehört bereits zum Stand der Technik. In der WO 85/05405 wird beispielsweise ein Verfahren zum Behandeln von Abgas angegeben, bei dem in einer Nachbehandlungsstrecke für Abgas, das vom Motorbrennraum abgelassen wird, eine nochmalige Verbrennung in einer Nachreaktion vorgenommen wird. Zur Erhitzung des Abgases bzw. eines Abgas-/Luft-Gemisches für die Nachreaktion wird dabei die von der Kolbenstrecke her einfallende Knall- oder Stoßwelle vom Motor ausgenutzt, indem die dieser Stoßwelle inhärente Energie in Wärmeenergie umgewandelt wird. Zu diesem Zweck wird die Stoßwelle so reflektiert, daß sie räumlich abwechselnd divergiert und konvergiert, wobei sich in den Konvergenzbereichen Heißzonen bilden. Das durch die Heißzonen geleitete Abgas durchläuft Nachexplosionen, die zu Schadgasreduzierung durch Nachverbrennung führen. Auf diese Weise wird also in der Knall- oder Stoßwelle vom Motor enthaltene Energie für die Nachverbrennung und damit die Schadgasreduzierung ausgenutzt. Mangelhaft ist bei diesem Verfahren jedoch noch der Abbau von Stickoxiden, die mit Nachverbrennungen oder Nachexplosionen nicht oder nur mangelhaft beseitigt werden können.

Die Aufgabe der Erfindung ist es, ein Verfahren zur Beseitigung von Schadstoffen im Abgas von Verbrennungskraftmaschinen zu schaffen, bei dem in einer Nachbehandlung des von der Verbrennungsmaschine abgelassenen Abgases die Energie von Knall- und Stoßwellen vom Motor auf eine neue Weise wirtschaftlich ausgenutzt wird, um Schadstoffe in unschädliche Stoffe umzuwandeln und gleichzeitig Lärmbelästigungen zu reduzieren. Dabei sollen mindestens gleiche Resultate in der Wirksamkeit der Abgasentgiftung wie mit Drei-Wege-Katalysatoren erreicht werden, ohne daß deren Nachteile beim Kaltstart und beim Dauerbetrieb entstehen und ohne daß Kompromisse bezüglich der Kraftstoffinhalte der Energieausnutzung eingegangen werden müssen. Auch soll in das Motorsystem selbst nicht eingegriffen werden, so daß die Vielzahl der Konstruktionsprinzipien durch die Nachbehandlung des Abgases praktisch nicht berührt und beeinträchtigt wird.

Diese Aufgabe wird bei einem Verfahren der eingangs angegebenen Art dadurch gelöst, daß das im wesentlichen in longitudinaler Richtung in den Hauptreaktionsraum der Nachbehandlungseinrichtung einströmende Abgas durch eine in longitudinaler Richtung bewegliche Grenzfläche abrupt abgebremst wird, und nach Reflexion an einer dieser Grenzfläche gegenüberliegenden Reflexionsfläche, die Teil eines Rückschlagventils ist, mehrfach reflektiert wird, um eine stehende Welle in dem Hauptreaktionsraum auszubilden, wobei die geometrischen Bedingungen, d.h. die Länge des Resonatorraumes für die stehende Welle, den Änderungen des Zustandes der Stoßwellen vom Motor angepaßt werden mit dem Ziel, die Energie der Knall- oder Stoßwelle vom Motor in Schwingungsenergie und Wärmeenergie umzuwandeln, wobei gegebenenfalls durch Ultraschall, elektrische und/oder magnetische Felder noch weitere Energie eingebracht wird, und im Takt des Abgasausstoßes vom Motor das während der Verweilzeit im Hauptreaktionsraum reagiert habende Gas ausströmen und neues Abgas durch das Rückschlagventil einströmen gelassen wird, wobei die erforderlichen Steuerungen für den thermodynamischen Reaktionsablauf und die geometrischen Bedingungen durch eine elektronische Prozeßsteuerung erfolgt.

Zur Durchführung dieses Verfahrens wird eine Vorrichtung angegeben, die dadurch gekennzeichnet ist, daß dem Motorverbrennungsraum eine Abgasnachbehandlungseinrichtung nachgeschaltet ist, die einen im wesentlichen zylindrischen Hauptreaktionsraum umfaßt, der dicht hinter dem Verbrennungsraum oder den Zylindern des Motors nach einem relativ kleinen Vorbehandlungsraum angeordnet ist und in Einströmrichtung des Abgases am hinteren Ende durch eine in longitudinaler Richtung bewegliche Prallwand begrenzt wird, deren effektive Prallfläche sich im Zentrum des Hauptreaktionsraumes befindet und kleiner als die gesamte Querschnittsfläche des Hauptreaktionsraumes ist, so daß ein Abströmen von Gasen zwischen Prallfläche und der Wand des Hauptreaktionsraumes möglich ist, und an seinem strömungsseitigen Eingang, d.h. der Prallwand gegenüber, von einem Rückschlagventil mit zur Prallwand paralleler Oberfläche begrenzt wird, und daß dem Hauptreaktionsraum ein Abströmbereich folgt, der ein Flatterventil enthält, das den Weg in den Endströmbereich verschließt oder freigibt.

Additive Wirkungen können bei der Erfindung dadurch erzielt werden, daß in der Einströmstrecke bis zum Hauptreaktionsraum Ultraschallwellen auf das Abgas einwirken gelassen werden, wodurch insbesondere in der Kaltstartphase und bei niedrigen Drehzahlen (Leerlauf) die Abgasreaktionen verbessert werden und bei diesen Motoren Rußstoffe vorbehandelt oder gelockert werden.

Bei der Erfindung wird potentielle chemische Energie, die als Brennstoffwärme in der Kraftmaschine nicht ausgenutzt werden konnte, durch additive Wechselwirkungen mechanischer, thermodynamischer und elektrodynamischer Wirkkräfte auf Elementarteilchen und elektrische Ladungen im nachmotorischen Bereich zur Entropieerhöhung weiter ausgenutzt. Das Verfahren der Erfindung war mit bestimmt durch die NO-Bildungs- und Zerfallskriterien, die einen gegensätzlichen Wirkungsmechanismus kennzeichnen im Vergleich zu den übrigen Abgaspartnern.

Denn die NO-Kriterien sind ein natürlich schwieriger Faktor der motorischen Verbrennungsseite wie der Emissionsseite deshalb: Alle Stickoxide sind in Bezub auf die Elemente, aus denen sie gebildet werden, endotherme Verbindungen,d.h., es gilt für sie stets: $X=1,2,...5: N_2+X/2O_2 = N2O_x$ -Q. Daher vereinigen sich $N_2$ und $O_2$ niemals bei normalen Temperaturen.Daß umgekehrt der Zerfall der gebildeten Stickoxide beiniedrigen Temperaturen nicht eintritt, liegt an der zu geringen Reaktionsgeschwindigkeit des Stickstoffs - die nur durch physikalische Wechselwirkungen ausreichend gesteigert werden kann.

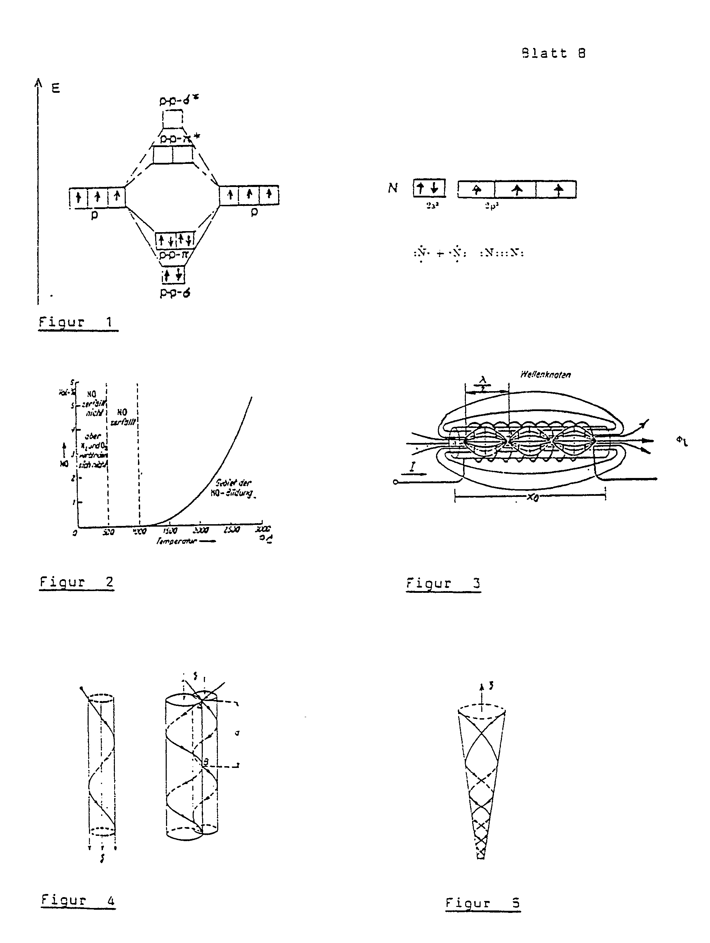

Im Explosionsmotor ist die NO-Bildung daher eine unerwünschte Beigabe. Die rasche Überführung von aus hoher Temperatur gebildeten NO-Molekülen in niedrige Temperaturen bewirkt deren"pseudostabilität". (Vgl. Zeichnung Blatt B , Figur 2 = NO-Gleichgewichtsanteile/Luft). Aufgrund dieser Kriterien bestand die Aufgabe, im gegenständlichen Verfahren eine Ortlichkeit verzögerter Abgasgeschwindigkeit 1) so im temperaturabhängigen Zerfallsbereich zu arrangieren, daß bei gleichzeitiger Einwirkung von Wechselwirkungen auf den Bindungsmechanismus -insbesondere auf den Spin des Sauerstoffs - schnelle Dissoziation erfolgt,diese beschleunigt und so lange aufrechterhalten wird, bis die volle Rückreaktion eingetreten ist.

Der Sauerstoff bietet als an allen Reaktionen beteiligter Gaspartner für eine Einwirkung auf die Bindungsenergie eine spezifische Eigenschaft, die dieser als einziges nichtmetallisches Element besitzt: Er hat auf dem höchsten Energieniveau ungeparte Elektronen mit parallelem SPIN, der dem Sauerstoff zusätzliche Kräftefelder antibindender elektromagnetischer Energie zuweist. D.h., er ist normalerweise als Gas paramagnetisch neben dem DIELEKTRIKA, das alle Gase besitzen. Diese antibindenden Kraftfelder sind durch äußere Zufuhr elektromagnetischer Energie gut erreichbar. Diese Lösung, durch Erzeugung elektromagnetischer Wechselwirkungskräfte auf antibindende Energiepotentiale des Sauerstoffteilchens- ursächlich der äußeren Elektronenschale zugeordnet und damit deren orbitale Energie zu aktivieren, trägt wesentlich zur beschleunigten Dissoziation bei im Phasenraum(Zeichnung ZA 6/18).Aufgrund des besonderen Spins hac Sauerstoff den größten SEKUNDÄREMISSIONSFAKTOr = 15.Er gehört damit zu den Stoffen, deren Elektronen die kleinste Austrittsarbeit erfordern (Wo = Austrittsarbeit).

Die Suche nach einer Systemtechnik, die bisherige begrenzende Wirkfunktionen bekannter Systeme nicht aufweist, führte aus den vorliegenden Erkenntniszusammenhängen zu der weiterführenden grundlegenden Neuentwicklung additiver REAKTOREN, in denen sich mehrere, sehr gut ergänzende synergetische physikalische Wechselwirkungskomponenten zusammenfügen, wie sie im kennzeichnenden Teil des Anspruchs 1 aufgeführt sind.

Diese Wechselwirkungen bringen mikrophysikalische Prozesse in Gang durch explosive Termenanregung auf Abgase, in denen fortlaufende Kettenreaktionen Ionisation,Strahlungsemission, Dissoziation und Rekombination bewirken zur Beeinflullung der NICHTGLEICHGEWICHTSVORGÄNGE. Durch die Kopplung der in den Ansprüchen dargelegten Wechselwirkungen beschleunigen mechanische, thermische, elektromagnetische und auch optische Eigenschaften der heißen reagierenden Abgase die Reaktionsvorgänge optimal.

Durch die dynamische Vernetzung von Kopplungsschwingungsfeldern im additiven Reaktor, wie in den Ansprüchen belegt, werden die bekannten Eigenschaften -hier mit über 550°C bereits reagierender Gase z.B.bei modernen PKW-Viertaktmotoren - zu explosivem Reaktionsablauf mit sprunghafter Termenanregung geführt, wobei mit jeder Temperatursteigerung um je 10°C sich jeweils der sekundäre chemische zusätzliche Reaktionsablauf in der Schnelligkeit verdoppelt.

So entsteht ein Hochfrequenz-Plasmabrenner, dessen Energie im motorischen Takt die Analyse aller Schadgasanteile bewirkt. Mechanik, Hydrodynamik, Elektrodynamik, Thermodynamik und Quantenfelddynamik tragen durch ihre Kopplung im gemeinsamen Phasenablauf zur rapiden Dissoziationsbeschleunigung bei, indem die Erzeugung echter elektrischer Verschiebungsströme im Abgas mit Transporterscheinungen der Energie von der Geschwindigkeit v = c, eine kollektive Schwingung aller Ladungsträger hervorrufen. Durch die große Beschleunigung der Ladungen schießen diese stets über ihre Gleichgewichcslage hinaus bis zur Emittierung der Elektronen. Zwisehen den geladenen Teilchen wirkende starke Coulomb-Kräfte übertragen durch die Technikanordnung der Wirkungsfelder lokale, zeitlich periodische Ladungsverschiebungen auf das ganze räumliche Reaktionssystem. Der Schalldispersion der Gase angemessene umgemodelte und fokussierte Ultraschallwellen aus motorischen Knallwellenkontiniums + separater Ultraschallwellen verstärken die Reaktionen.Die Folgen der sehr raschen thermischen Bewegungen und des hohen Druckes durch die Ausbildung "stehender Wellen" im gemeinsamen Phasenraum(ZA 6-6) sind bei optimaler Ausbildung und elektronischer

1) aber ohne unzulässige Widerstände in der Strömung aufzubauen oder Kompromisse, die den Nutzwirkungsgrad des Motors einschränken. .

Steuerung gemäß den Ansprüchen 1.a) bis 1.i) Plasmawellen.

Die erfindungsgemäße Ausgestaltung additiver Reaktoren stellt eine neue Art Hybrid-Reaktor dar in der Kopplung eines Stoßwellengenerator hoher Güte mit einem induktiv gekoppelten Plasmagenerator, der sich automatisch gemäß der Funktionsmerkmale der in den Ansprüchen 1 bis 19 belegten Technik-und Reaktionsanordnungen der Thermodynamik jeder Verbrennungskraftmaschine mit rotierender Ausgangswelle anpaßt.

Die motorische bisher ungenütze potentielle Schadgasenergie beträgt bei PKW-Viertaktmaschinen etwa 30% (in KW). Davon sind im gegenständlichen Verfahren 50% als mechanische-kinetische Energie frei zu machen durchadditive Ultraschall-, Knallwellen-,photomechanische und elektrodynamische Energien. Durch die hybride dynamische Nutzung der motorischen Prozeßabfallenergie in der belegten Anspruchsart,wird die Thermodynamik des Motors in günstiger Weise beeinflußt.Dies mit Hinweis auf den Kraftstoffverbrauch, der eher geringer ist. Dies ist möglich durch die neuartige Kopplung von frequenzmodulierbaren mechanisch-akustischen Wechselwirkungen mit elektromagnetischen Wechselwirkungen zur Optimierung der reaktiven Vergröllerung der molekularen und atomaren Übergangswahrscheinlichkeit von verbrennungstechnisch bzw. explosibel erzeugten Abgasen flexibler Gasmole,weil dadurch die motorische bzw. zylindrische Entgasungsarbeit gefördert wird.

Dadurch, daß alle energetischen Kopplungsglieder gemäß Anspuch 1 den thermodynamischen Motorgrößen sich additiv anpassen, diese in der Zeit zwischen zwei Kurbelwellenumdrehungen-wie beim Viertaker- sich je zylindrischer Emission optimieren lassen, wird bei allen Betriebsverhältnissen der Kraftmaschine eine sichere kontinuierliche Entgiftung durch Endausbrand der oxidativen Schadstoffantele und durch Reduktion von durch endotherme gebildeten Schadgasanteilen erreicht.Aufgrund der hohen Triebwertisdynamik mit entsprechenden Umsätzen, sind die konzentrierten Ultraschallwechselkräfte mit schnellen und hohen Druckgraduenten in der Kopplung mit induzierten elektrodynamischen Wechselfeldernderen Vorgangskarakteristik sich als Impulskette mit sich ausbreitender Geschwindigkeit $v = c$ darstellt, wobei der entsprechende Ablauf sekundär bewirkter chemischer Wirkungsmechanismen und Disproportionierung der beteiligten Abgaspartner dem Systemzustand entspricht - das einzig adäquate Mittel, um im verbrennungstechnischen Intervall die volle Zustandsänderung von Schadstoffen zu erreichen.

Die technische Lösung zum optimalen Reaktionsablauf liegt mit Schwergewicht in Formgebung und physikalischen -mathematischen Beziehungen der Reaktionsräume, den Reaktionsfolgen-und Größen, der Materialgüte-und Bearbeitung der Reaktionshauptkompönenten, der Anordnung und Größenauslegung physikalischer Wechselwirkungen, wobei die geometrische,synergetische und zeitharmonische Abstimmung über Mikroprozessoren nur noch jeweils geringfügige Anpassung an die Typen der verschiedenen Motorsysteme -z.B. Ottomotore erfordert u.a. Diese Feinabstimmung erfolgt über die integrierte elektronische Kennfelderfassung, wird also steuerungsmäßig geleistet. Von Bedeutung sind ferner einige Funktionskriterien für konstruktive Merkmale und Verfahrensablauf:

Der zylindernahe Anbau der Hauptreaktionsräume mit kurzer Anströmstrecke, einem relativ kleinen Vorraum vor dem Phasenhauptraum(ZA 4)bis 44 =Rückschlagventil), die optimal anschließenden Strömungspotentiale(ZA 18) über die Nebenreaktionsräume bis zum Abströmbereich(ZA 19) mit Flatterventilmechanismus(ZA 11), sind bedingt durch die Forderung nach sehr steiler Reaktionsenthalpie bei kurzer Verweilzeit je Reaktionsphasenraum.

Diese konstruktiven Merkmale unterliegen auch dem Kriterium, die Diskonuität des zylindrischen Auswurfs nach Zeit und Volumen der vollen Entropie zu unterwerfen, ohne bis zum Temperaturbereich von etwa 500°C im Abströmbereich(ZA 33) eine völlige Glättung der periodischen motorischen Thermodynamik zuzulassen.Thermische Verluste im Anströmungsbereich(ZA4) werden vermieden. Es erfolgt durch unmittelbare Induktion von Ultraschall bereits im Anströmbereich steiler Enthalpieanstieg mit sekundärer Redoxreaktion organischer Abgaspartner und Verstärkung von im Hauptphasenraum sich bildenden harmonischen Kräfte und dort umgemodelter motorischer Knallwellenkontiniums.

Die Ausbreitung dieser hochfrequenten harmonischen Dichtewellen kann als adiabatischer Vorgang angesehen werden, weil die hier erzeugten Verdichtungen und Verdünnungen innerhalb der Energiewellen mit sehr groller Geschwindigkeit erfolgen und unter den bedingungen des harmonischen Oszilabors kein wesentlicher Temperaturaustausch mit der Umgebung erfolgt ($C_1 = \sqrt{\dfrac{p \chi}{\rho}}$ , Laplacesche Gleichung).

Eine weitere Prämisse zur Erreichung maximaler positiver Entropie:

In Verbindung induktiver elektromagnetischer Kopplungsfelder wird dem Rekombinationsfaktor $= \alpha$ große Beachtung zugemessen. Dieser Faktor wird durch wesentliche Konstruktions-und Verfahrensmerkmale so klein als möglich gehalten.Denn erzeugte Ionisation nimmt zeitlich gesetzmäßig ab. Die physikalische Bedeutung der Konstante $\alpha$ wirft ein neues Licht aufdie begrenzte Wirksamkeit bisheriger Abgasbehandlungssysteme, und zwar wege der Bildung stationärer Zustände - bestimmt gemäß $\frac{dn}{dt} = 0$, woraus folgt: N = n+n- .Im gegenständlichen Verfahren ist eine ausreichende Begrenzung von Rekombination berücksichtigt.Zudem gelten die Fakten nur solange, als keine elektromagnetischen Felder vorhanden sind. Solche erteilen den Ionen eine gerichtete Bewegung, die sich der ungeordneten thermischen Bewegung überlagert.Durch die im additiven Reaktor angeordneten elektromagnetischen Felder im Strömungsbereich (ZA 6-18-19-20-33) wird unerwünschte Rekombination z.B.von $N_2$-Radikalen mit $O_2$-Teilchen zur NO-Bildung wesentlich abgehremst.

Eine Technikanordnung hierzu,die Strömung schief im Bereich (ZA 20/33) bis zum Winkel 45° einzulenken, ist eine Alternative in offenen Spulen mit homogenem Magnetfeld.Diese Technik bewirkt, daß die Ladungen zu einer die Magnetlinien spiralig umschlingenden Bahn abgelenkt werden (vgl. Zeichnung Blatt B-Fig.4).Je schiefer der Feldeintritt ist, desto größer ist der Kreis, der senkrecht zum Feld durchlaufen wird. Die Führung von verschieden geladenen N-O-Teilchen -u.a. wegen des bereits genannten $O_2$-Sekundärfaktors 1) - bis zu Abgastemperaturzonen unter 500°C ,bei gleichzeitiger Temperaturgefällstrecke(ZA 20/33),erschwert so eine neue Gleichgewichtslage von NO -Teilchen, da unter 500°C sich dann Stickstoff-und Sauerstoffteilchen infolge Reaktionsträgheit von Stickstoff nicht mehr verbinden können. (vgl. Zeichnung blatt B-Fig.2).

Während allgemein im additiven Reaktorverfahren physikalische WechselWirkungen darauf angelegt sind, unmittelbar in die Elementarreaktionen aller Abgasteilchen einzuwirken zur rapiden Aufspaltung der molekularen Energieniveaus, sind die elektromagnetischen Wechselwirkungen außerdem deutlich gerichtet auf die hingewiesene Elektronenfiguration des Sauerstoffs, mit Hinweis auf die geringe Austrittsarbeit der (äußeren) Elektronen zunächst.

Diese energetische Arbeit zielt auf den Bindungsmechanismus der NO-Verbindung, zur Anregung des labilen Gleichgewichts, weilin diesem die potentielle Energie ihr Maximum erreicht (vgl.Zeichnung Blatt E-Fig.21). NO reagiert hierbei mit Sauerstoffreadikalen unter Bildung von molekularem $O_2$ und Stickstoff-Radikalen, die von Kohlenwasserstoffteilchen "eingefangen" werden.Radikal-und Dissoziationsreaktionen erfahren durch die elektrischen angelegten Felder eine starke Beschleunigung wahrend durch die äquivalenten magnetischen Felder die Teilchenströmung geordnet wird. Durch Frischluftmangel während diesen Dissoziationsphasen wird außerdem mögliche Rekombination von NO aus $N_2$-Readikalen und größerer $O_2$-Konzentration sicher verhindert.

Die Schadgasumlagerungen erfolgen im "kalten Temperaturbereich" zwischen 500°C und 1000°C, unterstützt durch zwei Kühlkreisläufe; gemäß der deutlichen Sauerstoffanregung durch magnetische Felder im Kühlgefälle, wird eine mögliche neue Gleichgewichtsfindung zwischen N-O-Teilchen erschwert. Infolgedessen reagieren freie Sauerstoffteilchen daher mit dem anteilsmäßig genügend vorhandenen CO eher, als mit dem zu trägen Stickstoffpartner.

Die Zuführung elektromagnetischer Energie kann in verschiedenen konstruktiven Elementen erfolgen.Dazu eignen sich offene Zylindrische Spulen mit homogenem Magnetfeld im Hauptphasenraum(ZA 6-6), sonst offene Luftspulen in Form von Kegelstümpfen mit inhomogenem Magnetfeld und mit steigender Magnetfeldstärke; ebenso eine Sonderform als Rechteckspule. Zur Erzeugung inhomogener Wechselfelder durch Anordnung dünner, planparalleler Rechteckplatten mit Bildung oszillierender Felder und longitudinaler Stromrichtung eignet sich die Schaltung gemäß Zeichnung Blatt D-Fig. 11 in Verbindung mit einem LC-Element, um einige Technikmodifizierungen zu nennen.

Daß durch Verknüpfung additiver elektromagnetischer Einwirkungen eine schnelle Änderung der Energienieveaus eintritt, wurde schon gesagt. Daß dies für Sauerstoff in besonderem Maße zutrifft gründet darauf, daß dieser ein zusätzliches magnetisches Kraftfeld hat, dem ein äquivalentes elektrisches Zusatzpotential gegenübersteht. Da die Energieniveaus wellenmechanischen Karakter haben, sind diese über zugeführte elektromagnetische Felder bzw. über elektromagnetische Raumwellen gut erreichbar:Durch Verknüpfung atomarer Dieelektrika und magnetischer Spin-Konfiguration auf ihrem höchsten Energieniveau beim Sauerstoff.

Im additiven Reaktor verwendete Mikroprozessorschaltungen erzeugen zeitveränderliche Stromimpulse von etwa $<10^{-6}$. Durch zeitveränderliche Flächenströme können in den Phasenräumen elektromagnetische Raumwellen sehr hoher Frequenzen induziert werden.

Im additiven gegenständlichen Verfahren werden während der durch Schalldruck-Graduenten hochangeregten molekularen und atomaren Schwingungsphasen elektromagnetische Wechselfelder hoher Frequenzen unmittelbar in die harmonischen Ultraschallwellen - als "stehende Wellen"- induziert.

Die Verknüpfung elektrodynamischer Wechselfelder mit den Ultraschallwellenfronten, erzeugt infolge dieser unmittelbaren räumlichen Schwingungsform eine EMK, nämlich durch Bildung echter elektrischer Verschie-

1) Bergmann/Schäfer, Bd.II,Elektrizität und Magnetismus,6.Aufl.de Gruyter,1971 S.429 und
Physik,Jay OREAR, Cornell University,Carl Hanser Verlag München-Wien 1982,Kap.21-S.442 und Kap.24-S.527

EP 0 227 711 B1

bungsströme.Dies ergibt sich aus der Hauptgleichung des Elektromagnetismus

$$\frac{dD}{dt} \quad \frac{A}{4}$$

(MAXWELL) Diese innovative Lösung hat den Vorteil:

Es muß somit die bindungsenergie der Moleküle bzw.der Atome zur Dissoziation nicht allein von einer Energieart-und Kraft aufgebracht werden. Da Elektronen im Atom in dauernder Bewegung sind, erfahren sie als elektrische Ladungen sowohl die magnetische wie die elektrostatische Kraft.

Die Energie ist außerdem eine Funktion der Frequenz. Der Schwellenwert für die Dissoziation von NO wird durch die Kopplungsschwingkreise überschritten.Die dynamische Zuführung elektromagnetischer Energie ausreichender Frequenzen bewirkt die dynamische Verschiebung der p-Orbitalgrenzen. Durch induzierte Magnetfelder werden die p-p-$\pi$-* Orbitale räumlich gerichtet.Die Ultraschall-Mechanik "Stehender Wellen" -vgl- .Blatt B-Fig 3 - bewegt die Ladungen in kreisförmigen "Ladungsschleifen" um die magnetischen Kraftlinien herum, die sich zeitlich sehr schnell ändern. Dadurch bleibt das Feld im Innern nicht konstant. Durch die zeitliche Änderung von D (vgl. oblige Maxwell-Gleichung) bewegen sie sich, indem sie bei Zunahme von D auseinander rücken, bei Abnahme einander nähern. Damit ist der Strom bestimmbar.

Die zeitlich sich ändernden elektrischen Felder sind, da sie einen echten Strom darstellen, wiederum von geschlossenen magnetischen Kraftlinien umgeben.Die so erzeugten Induktionsströme haben eine Richtung,daß ihre Magnetfelder der Bewegung entgegenwirken.,d.h., daß positive Arbeit im Abgas geleistet wird. Da der induzierte Strom auf kosten mechanischer Arbeit geleistet wird, hebt proportional zur magnetischen Feldstärke die äquivalente elektrostatische Ladungsdichte das Energieniveau im Abgas an, um eine schnelle Elektronenumlagerung zu bewirken.

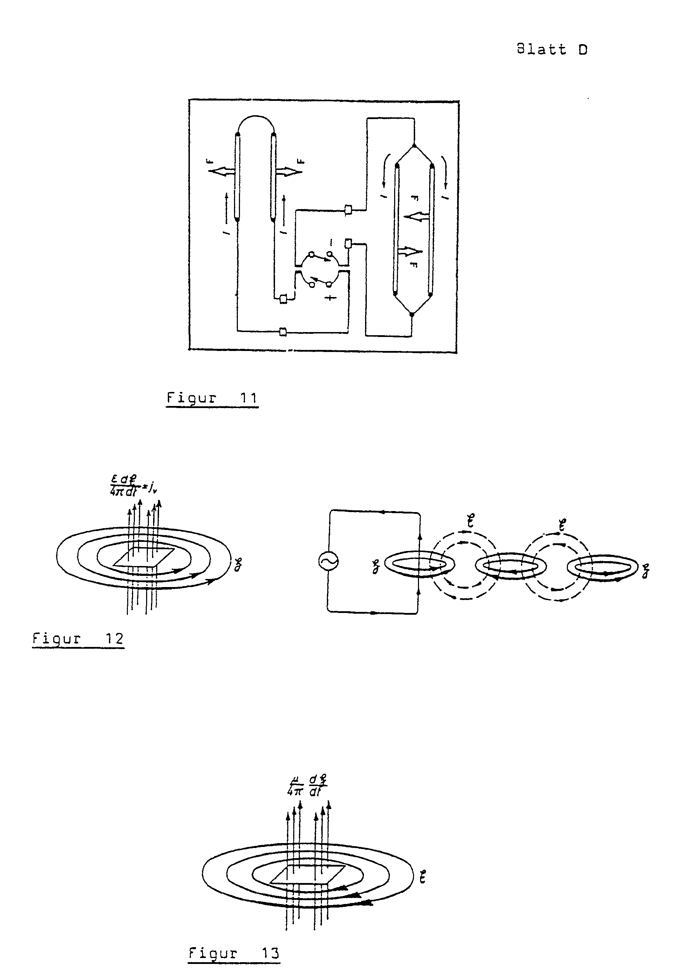

Nach dem Gesetz der Energieerhaltung wird die im magnetischen Moment zugrundeliegende Orientierungspolarisation bei höheren Wärmebewegungen eine Funktion der kinetischen Energie. Die Änderung des magnetischen Momentes beim Sauerstoff mit der Temperatur ist verbunden mit der linearen Überführung des Momentes in das elektrische-kinetische Moment pro Volumeneinheit,geht also in der additiven Reaktoranordnung in den Verschiebungstrom mit ein.Denn: Jedes sich ändernde Magnetfeld erzeugt ein elektrisches Wirbelfeld(und umgekehrt). VGl. Zeichnung Blatt D-Fig.12/13. Die im Hauptphasenraum in einer offenen Spule in Form"stehender Wellen" schnell bewegten elektrischen Ladungen bilden einen "offenen Leitungsstrom", der durch die Verschiebungströme geschlossen wird. Deshalb erfolgt wirkliche Verschiebung der in Volumenelementen des Dielektrikums vorhandenen positiven und negativen Ladungen; Positive werden in, Negative entgegen der Feldrichtung auseinandergeschoben.

Für die Kopplung potentieller elektrischer Ladungsenergie eines Kondensators mit magnetischer Energie in einer offenen Spule im Hauptphasenraum des Reaktors - in Verbindung mit dem erzeugten Verschiebungsstrom gilt, daß die maximale kinetische Energie:

$$\frac{1}{2} L^* J_o^{*2}$$

gleich der maximalen elektrischen Energie:

$$\frac{q_o^{*2}}{2C^{\cdot}} = \frac{1}{2} C^* U^{*2}$$

ist. Durch eine in den Schwinbkreis integrierte Löschfunkenstrecke wird die gesamte primär erzeugte elektrische Energie zur Nutzleistung verbraucht,d.h., im jeweiligen Phasenraum des Reaktors in JOULSCHE Wärme im Abgas umgesetzt. Zur Erzeugung hoher magnetischer Energiefelder werden offene Spulen benutzt, deren spiralförmige Windungen parallel zur Stromachse mit Kühlmedium versorgt wird.

Weitere Detailfunktionen anhand der Zeichnung A:(ZA)

Die querschnittsveränderten Nebenreaktionsräume dienen der Dissoziationsmaximierung (ZA 18), die Strömungspotentiale vom Raum (ZA6) nach(ZA 18) und die diffusorähnliche Bildung des Abströmbereiches (ZA 19) dienen der Strömungsdynamik, während die Saugfunktionen in Pos.(ZA 32), (19)und (45) eine schnelle Aufladung und Entgasung des Reaktors unterstützen.

Die Energiebilanz des Vorraumes (ZA 5/44) ist dadurch gekennzeichnet, daß der Überschalldruck mit motorischer Emission + Ultraschallströmung, mit der Saug-und Strömungsarbeit des Regelsystems(ZA 23) in Verbindung mit dem Abströmsog der kinetischen Entladung ab (ZA 20) in kinetische Energie der GASSAULE vor dem Einlaßventil zum Hauptphasenraum (ZA 44 -6/13),und diese in Verdichtungsarbeit der Frischaufladung des Zylinderauswurfs umgewandelt wird,als Saug-und Resonanzaufladung.

Die geometrische Bemessung der Reaktionsräume ist bestimmt durch die Entfernung von den Gasauslässen, der durchschnittlichen Geschwindigkeit der Emissionsströmung, dem durchschnittlichen Liefergrad der Zylinder und durch die Energiebilanz der motorischen Thermodyanmik + der induzierten Energie der Wechselwirkungen + der Reaktionsenthalpie der Gase.

Der Verbrauch und die Entstehung von mechanischer Energie ist bestimmt durch die hohe Drucksynthese und die explosionsartige Freisetzung der INNEREN ENERGIE. Im Abgas ist aufgrund der unvollkommenen Umwandlung der Kraftstoffe mehr Energie enthalten als im Endprodukt des Reaktors.

Die Differenz der Energiebeträge = die Energiegehalte der Mischung und der Verbindungen + der induzierten Energiewechselwirkungen wird als mechanische-und Wärmeenergie frei.Die Gesamtheit aller im chemischen System auftretenden Energiearten als INNERE ENERGIE ist abhängig vom Zustand des Systems,nicht vom Reaktionsweg. Es ist deshalb unmöglich, die innere Energie des Gesamtsystems selbst zu bestimmen. Die Änderung der inneren Energie kann nur durch Messung der direkt beobachtbaren Energiearten ermittelt werden.

Der Gesamtenergiebedarf beinhaltet die Kühlung des Reaktionsgemischs über einen inneren Kühlungskreis in Verbindung mit einem äußeren Kühlmantelkreis(ZA 31), die durch thermomagnetische Elemente bei Bedarf zur Kühlverstärkung unterstützt werden.

Durch die Arbeitsleistung bei annähernd konstantem Volumen kann eine gesamte Änderung der inneren Energie in Wärme erfolgen.

Die Einhaltung einer relativ niedrigen Temperaturdifferenz ab Warmlauf hat wenig Volumenarbeit zur Folge.

Die Kriterien bezüglich Formgebung,"freier Grenzwandfunktion"(ZA 13/14) sowie Material-und Bearbeitungsgüte-vor allem der Kontaktdeformationsflächen des Raumes (ZA 6-6/13-14) stehen unter den Normen des elastischen Stoßes, dem Aufbau und der Kopplung harmonischer Kräfte, da die physikalischen Eigenschaften der Abgase als hochelastische Stoffe dies bedingen. Einfache physikalische Formen und hohe Innenoberflächengüte machen die Phasenräume zu einem schwingunsfähigen Gebilde für harmonische Kräfte: Hohlraumresonatoren mit maximaler Stoßdynamik, als Voraussetzung für eine exakte mathematische Lösung der Stoßionisation, um Ultraschall-, kinetische Abgas-, motorische Knallwellen-und elektrodynamische Energien zu harmonisieren, wobei die elastischen Eigenschaften die Verstärkung der inneren Energie bewirken.

Die Explosionsknallwellen, mit denen zugleich etwa 50% des Gasmediums den Gasauslaß(bei Viertaktern) verlassen, werden gemäß den Patentansprüchen im Hauptphasenraum umgemodelt in harmonische Dichtewellen. Die Knallwelle ist physikalisch gesehen ein zunächst aperiodisches Ereignis, mit einem FREQUENZKONTINIUM (vgl. Zeichnung Blatt C-Fig.9). Bei jedem einzelnen explosiven Vorgang als Knall tritt zuerst anstelle der Summe von diskreten Teilschwingungen als Ergebnis das Frequenzkontinium auf.

Die Erzeugung eines motorischen Knalls bedeutet hier zunächst das Anstoßen eines schwingungsfähigen Systems, zunächst den Kolben und Zylinder. Das Gesamtsystem mit Kolben, Zylinder und der optimalen Auslegung des additiven Reaktors als harmonisches Resonanzgebilde, wählt abgestimmt aus dem Gesamtkontinium der Emissionen die passenden Frequenzen aus unter Berücksichtigung der optimalen Schalldispersion. Diese Bedingungen mit der Funktion der beweglichen freien Grenzwand (ZA 13) passen sich den Änderungen der Dynamik explosibler Emissionen steuerungsmäßig über den Mikroprozessor vollautomatisch an.

Die Ummodelung der Kontiniums in harmonische Dichtewellen mit sehr geringer Dicke der einzelnen Stoßfronten harmonisiert sich mit den zylindrischen Stoßwellen und den induzierten Ultraschallwellen zur Bildung "stehender Wellen" im Raum(ZA 6-6/13/14).

Durch lasergehärtete Kontaktdeformationsflächen mit feinstem Korn und hochelastischem Untergrund werden wesentliche Stoßmerkmale erreicht:

Einmaligkeit und sehr kurze Zeitdauer des Stoßvorganges, mit Verstärkung der rasch ansteigenden Enthalpie im Hauptphasenraum, weil die Berücksichtigung der Elastizitätsmodule die Moleküle mit verstärktem Energieinhalt reagieren läßt.

An der freien Grenzwand, an der alle ankommenden Energiekräfte abrupt abgebremst werden auf Null, kehrt sich die Geschwindigkeit um.Die laufenden elastischen Wellenkräfte erfahren aber eine deutliche Steigerung, weil Impuls und Energie restlos an das Abgas abgegeben werden-ein adäquates Mittel zur rapiden Beschleunigung der Gasdynamik.Es erfolgt dadurch rein homogene Gasaufheizung, da die gesamte kinetische Energie dort, wo alle Energieformen-und Anteile an der Reflexionswand sich treffen, restlos in thermische Energie und in Kompressionsarbeit umgesetzt werden.

Es entsteht Druckdiskontinuität im Gas,weil jede nachfolgende einzelne Dichtewelle in ein Gasmedium hineinläuft, das schon eine etwas höhere Geschwindigkeit hat. Diese Impulsänderungen werden zu beiden Seiten der Kompressionsfronten pro Zeit und Masseneinheit verursacht.

Bei Einsetzung spezifischer Gleichungen für aus explosiblen Vorgängen gebildeten Stoßwellen zeigt sich, daß der ganze Vorgang irrversibel ist. Diese totale ENTROPIEerzeugung ist dem Energietransfer und den Transportvorgängen in den Stoßfronten zuzuschreiben.($\Delta S > 0$ )

Die gesamte Entropieänderüng bei reversibler Wärmezufuhr bei gleichbleibendem Volumen zum Endstand p ergibt sich durch den Ablauf:

$$S_2\text{-}S_1 = c_v \ln \frac{T2}{T1};$$

S ist dabei die Entropie und $c_v$ die spezifische Wärme.

Die Gesamtwärmekapazität bewirkt sehr schnelle Dissoziation,verstärkt durch sehr rasche chemische Reaktionen.Durch die rasche Dissoziation nimmt die Zahl der Teilchen zu. Es kommt zur deutlichen Photonenreaktion.

Bei der "freien Grenzwand" wir die Grundflache abstimmungsmäßig zur auffallenden Wellenfront kleiner gehalten. Das Gas kann seitlich besser ausweichen, wodurch sich Knoten und Bäuche besser bilden. (Vgl. Zeichnung blatt C-Fig.6).Voraussetzung für eine gute Wellenbildung ist die Reflexion an einer glatten,ebenen Wand, wie solche an Stahl/Luft, weil Gase einen sehr kleinen Schallwiderstand haben.für Luft ist dieser nur $0,0004\cdot10^6$, sodaß für die Grenze Stahl/Luft der Reflexionsfaktor sich nur um etwa $1\cdot10^{-6}$ vom Wert 1 = Vakuum unterscheidet. (Vgl. Zeichnung Blatt C-Fig. 7 = "stehende Welle" bei Reflexion an einer "frein Grenzwand".

Zeichnung Blatt C-Fig.8 zeigt zum Verständnis der Abstrahlung von solchen Wellenfronten das Hygensche Prinzip im Querschnitt eines klobenförmigen Schallabstrahlers mit einigen nach diesem Prinzip konstruierten Wellenflächen.Das Prinzip besagt, daß man irgendeine Wellenform aus einer großen Zahl einfacher Kugelwellen aufbauen kann, so wie im gegenständlichen Verfahren.

Da die Druckverteilung abhängig ist vom drehzahlbestimmten Energiestrom, soweit hier motorische Schallwellen betroffen sind, kann zum Ausgleich der unterschiedlichen Energieströme in Abhängigkeit von der Drehzahl,die "freie Grenzwand" longitudinal verschoben werden. Die veränderliche Hohlraumresonanzgröße ist das adäquate Mittel, die unterschiedliche kinetische motorische Emission in der Einströmung symmetrisch auszugleichen zum maximal erforderlichen Schalldruck.

Diese Darlegung wesentlicher beispielhafter Einzelheiten,machen für den Konstrukteur die richtige Lokalisierung zusammenhänger Funktionsglieder deutlich.

Die im Hauptanspruch und Nebenansprüchen belegten Definitionen zeigen, daß die konstruktive grundlegende Gestaltung apparativer, geometrischer und physikalisch-synergetischer Wirkungsabstimmungen Differenzierungen beinhalten, ohne vom Ergebnis voller Schadgasbeseitigung abzuweichen.Diese Möglichkeiten sind ein Vorteil bei der Anpassung der Wirkungsglieder an die Vielfalt motorischer Typen und Baureihen.

Die dargelegte erfindungsgemäße additive Reaktortechnik als thermodynamische Kreisschliellung der Kraftmaschine mit innerer Verbrennung,wird an einem Ausführungsbeispiel des Verfahrensablaufes bzw. der apparativen Technik anhand der Zeichnung A(ZA), des Funktions-Schemas (FS) und der Zeichnungen Blatt B bis E beschrieben:

über die kurze Einströmstrecke(ZA 4)gelangen die zylindrischen Emissionsenergien mit hoher Geschwindigkeit-z.T. mit Überschall-, mitbestimmt durch die drehzahlbedingte Kolbengeschwindigkeit(FS 10)-durch das mit der Ventilsteuerung(ZA 4E) gleichzeitig öffnende Rückschlagventil(ZA 44) in den Hauptphasenraum(ZA 6–14),wobei die spezifische Abgastemperaturbei PKW-Viertaktern etwa 550°C bis 800°C -durch in der Einströmstrecke (ZA 4) einwirkende Ultraschallenergie(ZA 5) eine erste deutliche Enthalpiesteigerung durch homogene Termenanregung erfährt; der unmittelbare Druckanstieg bewirkt gleichzeitig die dynamische Aufladung des Raumes (ZA 6/14). Die ersten an der "freien Grenzwand" reflektierten schnelleren motorischen Überschallwellen,laufen dem gleichzeitig nachströmenden Hauptschub des Abgasmediums entgegen.Der sehr rasch erfolgende Aufbau harmonischer Wellen mit entgegengesetzter fortlaufender Richtungsausbreitung erzeugt "stehende Wellen".Es werden Druckgraduenten im Abgas gebildet. Die separate Ultraschalleinwirkung(ZA 5) reguliert den Abgasreaktionsmechanismus in der Kaltstartphase, beiniedrigen Drehzahlen (Leerlauf), dient bei Dieselmotoren in konzentrischen Ansätzen zur verstärkten Vorbehandlung von Rußstoffen und zur synergetischen generellen Steigerung der Druckgraduenten im Hauptphasenraum während aller Betriebs zustände.

Zur Erzeugung separater Ultraschallwellen werden mechanische US-Generatoren in Form offener Gasstrom-Hohlschwinger verwandt, die in der Rohrwandung(ZA 5) justiert sind, so, daß die Energieströmung den motorischen Emissionen hindernisfrei folgen kann in den Hauptphasenraum.

Die Erregung der Hohlschwinger erfolgt durch separat herangeführten Gas/Luftstrom, der in dünnen Röhren(ZA 12/32) mit feiner düsenförmiger und mit gesteuerter Geschwindigkeit an den als Oszillator wirkenden Hohlschwinger herangeführt wird, wobei dieser sich periodisch mit dem Gas/Luftmedium füllt und im Hohlraum "stehende Wellen" mit gewählter und modulierbarer Frequenz entstehen.

Mit den im gegenständlichen Verfahren verwendeten offenen Generatoren werden Frequenzen erzeugt bis etwa 270 KHz, bei einer zugrundegelegten Abgastemperatur von 200°C und 332 m/s. - gesteuert durch das elektromechanische Regelsystem mit Kompressor(FS 23). Hohlschwinger-Stereometrie:
Wenn 1 = 0,5 und d = 0,3 ergibt sich die Beziehung $\lambda/2 = 1+0,3d = \lambda/2 = 0,8$ oder $\lambda = 1,6$; Schallfrequenz des Gasgemischsmediums bei

12

$$200°C = 331,6 \text{ m/s} \sqrt{1 + \frac{200}{273} °C} = f = \frac{v}{\lambda/2} = \frac{436,5}{1,6\cdot10^{-3}} = 272 \text{ KHz};$$

Mit der Vorrichtung offener Oszillatoren gemäß dem gegenständlichen Verfahern lassen sich Vorteile erzielen bei geringem Platzbedarf, die in der Gesamtanordnung-und Wirkung liegen. Der eigentliche Vorteil ergibt sich daraus, daß die Ausbreitungsgeschwindigkeit zugleich die Geschwindigkeit des Energietransportes innerhalb der Schallwelle ist. Diese hängt von den physikalischen Eigenschaften des Mediums ab. Diese US-Vorrichtung gemäß der geometrischen Ortsbestimmung ist gekennzeichnet dadurch, daß die verwendeten.US-Strahler mit der Wellenlänge λ/2 -im Verhältnis zu den freien Weglängen der Gasmoleküle, für einen schnellen adiabatischen Enthalpieanstieg geeigneter sind, als z.b.Oszillatoren mit λ/4, wie sie gegenüber dem Technikstand gemäß der Patentchrift 1751369 angewandt sind. Bei höheren Energiedichten, wie sie im gegenständlichen Verfahren bewirkt werden, ergibt sich mit λ/2 und der doppelten Frequenz, ein deutlich steiler Anstieg der Wirkungsgrad/Frequenzkurve, dessen sich neigender Ast später beginnt. Dadurch höhere erzielbare Druckgraduenten bei größerem Frequenzumfang bieten andererseits eine größere Leistungsreserve für den symmetrischen Ausgleich zwischen Kaltstart/Leerlauf-und Vollastphasen, insbesondere im Dieselbetrieb, um durch Auflockerung fester Rußstrukturen diese im Hauptphasenraum unter der nachfolgenden Wellenmechanik endlich einer Verbrennung zugänglich zu machen.

Ferner werden durch die erfindungsgemäße Anordnung die Reaktionsphasen u. a. der Kraftstoffkomponenten KWST,CO ggf."Bleibenzin" zu den elektronegativen Stickoxiden angenähert, indem durch US-Termenanregung die Ring gerüste aromatischer Verbindungen rascher zerfallen, sodaß bei den etwas späteren Zerfallsreaktionen von NO im gemeinsamen Phasenraum ein besseres Disproportionierungsverhältnis gegeben ist.Die vorgezogene US-Einwirkungsphase beschleunigt nunmehr die Aufspaltung der Valenzelektronenenergie. Dadurch laufen die - wie durch elektromagnetische Maßnahmen bewirkte Aufspaltung der NO-Elektronenenergie -Redoxreaktionsprozeße zeitlich schneller ab, außerdem aber vollständig.

Die elektronische Kennfeldsteuerung bringt diese Reaktionsphasenabstimmung auf ein Optimum.

Durch die im Hauptphasenraum an der "freien Grenzwand" stattfindende totale Reflexion wird Phasenumkehr bewirkt.In dem für harmonische Kräfte ausgebildeten Resonator formen sich "stehende Wellen" zwischen der-"freien Grenzwand(ZA 13) und dem Ventil (ZA 44).

Die gesteigerte, erzwungene Thermodynamik setzt sich über die verbindenden Strömungspotentiale(ZA18) in die Nebenrekationsräume fort und weiter unter dem Einfluß elektromagnetischer Energiezufuhr über die Strömungspotentiale (ZA 19) in den düsenförmigen Endbereich der Reaktionsräume, in dem sich die nunmehr dissoziierten Gassäulen wieder vereinen bis zum Flatterventilmechanismus(ZA 11), wonach der Hauptreaktor kurzzeitig eine Reflexions-und Reaktionscinheit bildet zur maximalen Entropiesteigerung im zeitlichen Zwischenraum des nächstfolgenden zylindrischen Arbeitstaktes. Durch die geometrischen Resonatorgrößen 1/d, der durch Mehrfachreflexionen sich vergrößernden Geschwindigkeit fortlaufender sich entgegengesetzt überlagernden Wellen, der Bewegungsfunktion der freien Grenzwand an die durch wechselnde Drehzahl und Kolbengeschwindigkeit unterschiedliche Periodizität motorischer Knallwellen, wird die Bildung einer "stehenden Welle" bestimmt, die durch ausgleichbare Resonanzen zu einer vergleichmäßigten, elektronisch gesteuerten Schalldruckwechselzone mit bestimmbarer Frequenz,Amplitude und Anzahl der Knoten gelangt. Mögliche "stehende Wellen" der Resonanzen gehorchen der im elektronischen Kennfeld implizierten Beziehung :

$$\lambda n = \frac{21}{n}.$$

Die Frequenz f für den Resonanzraum des Reaktors kann den Patentansprüchen nach im voraus bestimmt werden für die Beziehung

$$f = \frac{c}{41} \text{ oder } f = \frac{c}{21}.$$

Im folgenden Ausführungsbeispiel wird ein Phasenraum bestimmt von 5,5 cm Durchmesser; der gewählte Abstand zwischen zwei Knoten wird mit

$$f = \frac{c}{41}$$

gemäß der Zeichnung A bestimmt; die "freie Grenzwand" im planparallelen Mittelteil ist d = 3 cm. Der Knotenabstand wird bei einer maximalen Bildung von 8 Knoten = mit λ/2 = 0,03m und für λ = 0,06m - bei einer maximalen Amplitude von 0,0275 m -bestimmt.

Bei einer Abgastemperatur von 650 °C ergibt sich die Schallgeschwindigkeit c aus der Beziehung :

$$331,6 \text{ m/s} \sqrt{1 + \frac{t}{273} °C} = c = 609 \text{ m/s}.$$

Die FREQUENZ ist dann

$$f = \frac{c}{\lambda} = 10150 \text{ s}$$

und für

$$f = \frac{c}{\lambda/2} = 20300 \text{ s.}$$

Die SCHALLSCHNELLE $\mu$ mit anfänglicher Amplitude ymax = 0,02 cm ergibt sich nach $\mu = 2\pi f \text{ymax} = \mu = 6,28 \cdot 10150 \cdot 0,02 = 1274,84$ m/s.

$$\text{Die SCHALLINTENSITÄT I ergibt: } I = \frac{\rho \mu^2 c}{2} = 84,13 \cdot 10^7 \text{ erg/cm}^2 \text{ s}$$
$$= 84,13 \text{ W/cm}^2$$

(Dichte: $\rho$ ) 1) Anfängliche Gasdichte etwa 0,00170 bei 650°C und 107200 Torr

Der SCHALLDRUCK p ergibt:

$$I = Ec = \frac{1}{2}\rho c\mu^2 = \frac{1}{2}p\mu = \frac{1}{2}\frac{p^2}{\rho c} = I = 2Ic = 10,12 \text{ at/cm}^2.$$

(INDEX: $\dfrac{\mu^2 c \rho}{\dfrac{m}{s} \dfrac{m}{s} \dfrac{Kg}{m}}$ ; E = mittlere Energiedichte;)

Das heißt, die Kompressibilität von Gasen-etwa 20000-fach größer als die von Wasser -wird genutzt, um einen periodischen Wechseldruck der laufenden Ultraschallwellen von 10, 12 at/cm² Überdruck und 10, 12 at/cm² Unterdruck auf Abgasmoleküle auszuüben. In einer stehenden Welle verdoppeln sich diese Werte. Da die Wellenlänge 0,609/20300 = 0,03 m ist, ergeben die Druckunterschiede von 20,24 at/cm² einen Druckgraduenten im Haupt phasenraum von 162 at/cm ².

In dieser dadurch bedingten steilen Enthalpie werden Dissoziationsenergien erzeugt durch die Induktion elektromagnetischer Feldenergie, wobei der Hauptphasenraum ausgelegt ist als offene Spule mit longitudinalem Magnetfeld, mit technischer Stromrichtung zur "freien Grenzwand". Im Anwendungsbeispiel wird die Spule mit 1 = 20 cm vorgerichtet als Resonanzraum, sodaß der gesamte die Windungsfläche verlassende magnetische Induktionsflull den Resonanzraum durchsetzt, damit die kreisförmigen Ultraschallschwingungen sich mit magnetischen Flußlinien intensiv koppeln, besonders aber vorn und hinten (vgl. Zeichn. Blatt B-Fig.3). Die Energieleistung ergib: sich aus:

$$SI = Em^* = \frac{1}{2} \cdot \frac{\mu\mu_0 N^2 A}{1} \cdot J^{*2} = \text{magnetische Energie.}$$

Der Spulendurchmesser ist 5,5 cm = 23,75⁻³m² Querschnitt. Die technische Auslegung erfolgt für eine additive Elektronenanregung zum Punkt $W_o$ für NO-Moleküle.

Spulendaten:

N = 43 Windungen cm⁻¹ = 43 · 20 cm = 860 Windungen

A = 0,02375 cm⁻¹

J = 1000 Ampere durch Kondensatorbatterie

Hi = 1000 · 860 = 860000 Amp./20 cm

$\mu$ = 5

$$Em^* = \frac{1}{2} \frac{5 \cdot 1,256 \cdot 10^{-6} \cdot 860^2 \cdot 23,75^{-3}}{0,2o} \cdot 1000^2 = 275750 \text{ J/W s.}$$

Technische Daten für die Nebenreaktionsräume (ZA 18): Spulendurchmesser = 3,5 cm; Querschnitt = 9,62⁻³m²; J = 1000 Ampere; 30 Windungen/cm⁻¹ = 720 Windungen bei einer Spulenlänge von 24 cm; Hi = 1000 · 720=720000 A; Em* nach der obigen Beziehung = 64415 J/ W s je Nebenreaktionsraum.

Für eine Spule im Bereich der Position (ZA 33) ergeben sich folgende Daten:

N = 30 Windungen cm⁻¹; Spulenlänge = 30 cm = 900 Windungen,

A = 28,27⁻³m² bei 8 cm Spulendurchmesser;

J = 500 Ampere durch Kondensatorabgriff

Hi = 500 · 900 = 4,5 · 10⁵ A

Em* nach der obigen Beziehung = 78809 J/W s.

EM*/Reaktor somit = 275,75+ 128,83 + 78,8 = 483,38 KW/s.

Diese Energiezufuhr mit der Geschwindigkeit v = c erhöht die INNERE Systemenergie sprunghaft. Dadurch erhöhen sich ebenso die Druckgraduenten. Bei Erreichung der Volldissoziation schaltet das gekoppelte Ener-

EP 0 227 711 B1

giesystem über die elektronische Kennfeldeingebung automatisch ab; diese Technik feldkopplung stellt sicher, daß sich die Dissoziationsphase für NO ausreichend verlängert, sich das labile Gleichgewicht -vgl. Zeichnung Blatt E-Fig.21- von N-O erhält bei fallender Temperaturverschiebung in Abströmrichtung, bis etwa 500°C, und die mögliche Rekombinationsrate einen unerheblichen Wert erhält.

Als Kondensatoren kommen solche infrage unter Verwendung einer innovativen Energietechnik-Folie, wie Trespaphan, die sich auszeichnet durch große elektrische Speicherkapazität bei hohen Stromdichten mit niedrigstem Gewicht - Dicke nur sechs Tausendstel mm- geringem Volumen bei hoher Impulsfestigkeit mit Spitzenstromresistenz, thermischer Stabilität und größter Zuverlässigkeit.

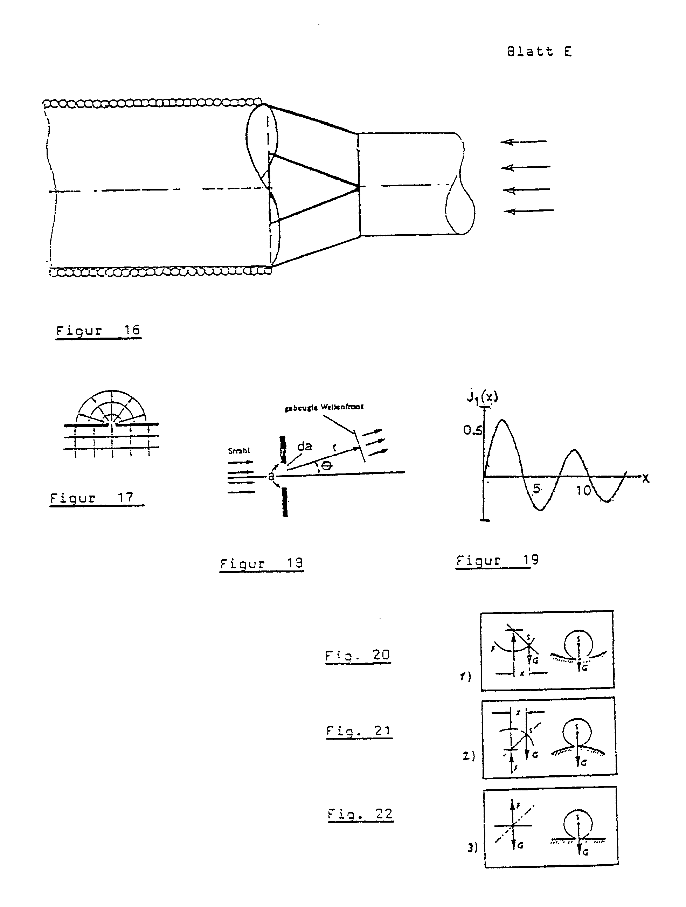

Nachdem durch Druckimpuls bestimmter Einstellung oder elektronischen Steuerimpuls des zyklischen motorischen Ablaufs (ZA 10) das Flatterventil öffnet, erfolgt Mediumseinströmung in die Zugstrecke (ZA 20).Merkmale: Sogverstärkung durch Luftinjektoren in Position (ZA 45), wobei (ZA 46) schon nahe der Temperatur 500°C liegen soll. Die Anordnung der Strecke erfolgt als elektromagnetische Spule(homogen-vgl.Seite 23 hier die Daten) zur geordneten Teilchenströmung, wobei als Verbindungstück in(ZA 20)zwischen den Streckenteilen ab (ZA 11) zu(ZA 33) zur schiefen Anlenkung(vgl. Zeichnung Blatt B-Fig.4) ein kurzer Kegelstumpf mit einem inneren Kreiskegel angeordnet ist(vgl. Zeichnung Blatt E-Fig.16).

Die zeitliche Integration der Reaktionsabläufe und der gesamten Strömungsdynamik-von(ZA 4) bis (ZA11) und weiter über (ZA 2o/33) in das Arbeitsspiel des Motors, geschieht ohne zusätzliche Widerstandserhöhung im Vergleich bisheriger Serienauslegungen.

Die Dynamik der additiven Systemreaktion läßt eher eine höhere Zugstekkendynamik zu. Nurin der Kaltstartphase wird-fein dosiert-Frischluft eingeblasen (besonders in der kalten Jahreszeit) zur ganz kurzfristigen Erhöhung der Reaktionsfähigkeit von KWST-und CO-Verbindungen über das Regelsystem (ZA 12/23); hierbei wird Luft über einen Außenfilter(ZA 12) und über den Kaltstartregler/Leerlaufregler (ZA 35) in Verbindung mit der Ultraschallanregung zur schnellen Enthalpiesteigerung angesaugt. Nach erreichen der idealen Reaktionstemperatur-in der Regel etwa nach 10 bis 20 Sekunden-für nicht oxidative Termenanregung, wird die Gasströmung nur noch aus dem Bereich (ZA 45) bzw. (ZA 32/39) entnommen.

Für die Kühlfunktion des Reaktors(ZA 31) in Verbindung mit dem Kühlkreislauf (ZA 43 = Abgas + Luft-Kühlung(ZA 40/39) sorgen Meßfühler (ZA 27/28) über die elektronische Kennfeldsteuerung.

Ein Drucksteller - der verzögerungsfrei und stufenlos elektronische Impulse in hydraulischen Druck umsetzt-regelt den richtigen Systemdruck und die Ultraschallanregung. Die Einhaltung einer "kalten" Reaktionstemperatur wird durch zwei Kühlkreisläufe unterstützt: Kompressor-Gaskühlung gemäß (ZA 23) und über (ZA 43) und den motorischen Wasserkühlkreis lauf(ZA 22/31.Bei Erreichung der Warmlaufphase schaltet das Mischventil (ZA 35) die Zufuhr von Frischluft über den Filter (ZA 12) durch Schließimpuls(e) aus. Die aus dem Abströmbereich (ZA 19) entnommene Abgasmenge wird über das Ventil(ZA 39) dem Regelsystem zugeführt(vorentspannt) und -falls erforderlich- dem Kühler (ZA 43) zugeleitet. Das Maß der Temperierung erfolgt im Kreislauf (FS 43/40/39/41) an die Ultraschallgeneratoren(ZA 5), möglich bis etwa 200°C herab je nach Impulsen der Positionen (ZA 27 und 28).

Die optimale Abstimmung der zeitlichen, örtlichen, temperaturmäßigen, kinetischen und elektromagnetischen Abläufe bewirkt der zentrale Mikroprozessor(FS 24) über die gesamte elektronische Kennfeldvernetzung. Da es im gegenständlichen Verfahren gleichgültig ist, wie sich die Abgase chemisch/stöchiometrisch zusammensetzen, können alle motorspezifischen Regelungselemente über die elektronische Kennfeldvernetzung zur Leistungsoptimierung integriert werden, z.b. Regelung für Warmlauf und Kaltstartverbesserung, stöchiometrische Gemischeinstellung u.a..

Das Funktionsschema (FS) zeigt den additiven Reaktor in seiner funktionalen möglichen Verbindung mit modernen leistungsoptimierten Verbrennungsmotoren. Ein wesentliches Merkmal des additiven Reaktorverfahrens ist somit, daß bewährte Maßnahmen des Gaswechsels, des Kraftstoff-Luftgemisch oder der Injektionsverfahren, nicht infrage gestellt werden.

Denn die Wirkungsabstimmungen im additiven Reaktorverfahren nehmen die motorische LEISTUNG als LEITINFORMATION für alle nachgeordneten additiven Reaktionsmaßnahmen, um zugleich über motorabhängige Funktionen zur Leistungsoptimierung (WIRKUNGSGRAD/BRENNSTOFFUMSETZUNGSGRAD)- also Abgasgemischqualität - den Kraftstoffverbrauch sehr sparsam zu regulieren, z.b. bei Kaltstarteinspritzung in moderner Version(ZA 34) in Verbindung mit Thermozeitschalter (ZA 26), wie sie bereits Paletten von Hochleistungsmotoren besitzen.

Diese additiven Vorgänge stehen im Gegensatz beispielsweise zum Dreiwege-Katalysator, der reziprok arbeitet, in dem bei ihm die Abgasqualität als LEITINFORMATION für die motorische ENERGIEBILANZGRÖSSE - die der Katalysator benötigt- genommen wird: Ein Regelverstoß gegen die klassische Optimierung des Verhaltnisses Energie/Nutzwirkungsgrad. Im additiven Reaktor wird der motorischen Leistungsoptimierung-über den Kaltstart und Warmlaufbereich und über den gesamten Wechsellastbereich die beste Gemischregelung ohne thermische oder sonstige zusätzliche energetische Verluste ermöglicht.Unabdingbar hat eine

15

optimale un verbrauchsorientierte LEISTUNGSELASTIZITÄT des Motors Gemischeinstellungsfaktoren unterhalb Lambda 1,z.b. für hohe Vollastausbeute beim Überholungsvorgang.

Die Bestimmung der durch das additive Reaktorverfahren optimierbaren Restgasverwertung in der Thermodynamik eines jeden Motor-Systems ergibt sich aus der Entropiegröße der Abgasstoffe. Diese ist identisch mit der zu aktivierenden Inneren Energie der Gasverbindungen. Denn jedes motorische mechanische Zustandssystem steht unter einem bestimmbaren Gleichgewichtsverhältnis. Die additiven Reakorgrößen betreffen solche Gleichgewichte. Die Definition des Gleichgewichts der Mechanik auf additive Reak torgrößen trifft insofern zu, als auch ein System, in dem nur Beschleunigungen auftreten, ein Gleichgewichtssystem ist, bei dem die beschleunigenden Kräfte mit den auftretenden Trägheitskräften im Gleichgewicht sich zu befinden suchen.

Das thermodynamische Motorsystem befindet sich durch das additive Reaktorsystem deshalb im Gleichgewicht, weil seine Gesamtentropie den größt möglichen Wert besitzt und dieser sich bei allen vorgegebenen Versuchs bedingungen verträglicher Zustandsänderung nicht mehr ändert.

Alle vorgenannten Vorteile des Systems werden ergänzt durch weitere positive Faktoren. Bei einer Bilanz des additiven Reaktorssystems sind folgende Faktoren für den wirtschaftlichen Einsatz zu beachten:

Dem additiven Reaktor wird neben dem Abgasmedium elektromagnetische Energie, Ultraschallenergie und motorische Prozeßabfallenergie zugeführ

Das gereinigte Abgas verläßt den Schadgasumsetzungsprozeß als Wärmestrom infolge Transmissionswärmeverlust und als Prozeßwärmestrom aus dem gesamtthermodynamischen Kreisprozeß. Der innovatorische Nutzen liegt so auch in der erstmaligen optimalen Nutzung von Prozeßabfall-Energie in Verbindung mit einer abgasmindernden und schadgasbefreienden Physik- Technologie, aus den Erkenntnissen physikalischer Elementarvorgänge bei explosiven Verbrennungsvorgängen mit der ebenso praktisch-nützlichen Integrierung vorhandener bewährter Kraftmaschinentechnik. Die additive Hybridtechnik berücksichtigt als kybernetischer Naturregelkreis mit der Anwendung grundlegender Wechselwirkungen die Gesetzmäßigkeiten der Natur. Der technisch-bionischen Entwicklung ging eine methodische Bedarfsanalyse voraus, die im Ergebnis zur positiven Energiebilanz führt.

In der vorseitig erwähnten Energiebilanz ist auf der linken Seite der elektrische-, der Ultraschall-und der motorische Prozeßabfall-Energiestrom erfaßt, die zusammen die wesentlichen Betriebskosten ergeben. Ist, wie im gegenständlichen Falle, der motorische und additive Wärmeprozeß vorgegeben und sollen die Betriebskosten(linke Bilanzseite) klein gehalten werden, muß der Transmissionswärmeverlust im Wärmestrom und der Enthalpiestrom des Reingases klein sein, der Enthalpiestrom des Abgases groß sein.

Diese Bedingungen werden durch die Darlegungen der additiven Reaktortechnik voll erfüllt.Die für eine Umsetzung der Schadgase günstige Temperatur wird bei allen Motoren praktisch ohne Abgasvorwärmung erreicht,während bei vorgegebenem Abgasvolumen und Abgastemperatur die Beladung des Abgases mit brennbarem und zugleich hochreaktionsfähigem Gemisch + energetischer Additive möglichst groß ist(großer latenter + aktiver Enthalpiestrom des Abgases).

Die kompakte Bauweise des Reaktionskammersystems, da sich alle Reaktionsräume und Funktionsteile konzentrisch um den Hauptphasenraum anordnen(lassen), ergibt eine sehr raumsparende und leichte Bauweise vgl. Zeichnung(ZA). Die für einen betriebssicheren flexiblen additiven, Reaktor und zugleich wirtschaftlich berücksichtigte Kritenen sind:

– Sehr guter Endausbrand mit deutlicher Unterschreitung aller bisher vorgeschriebenen Emissionswerte bei niedrigen Reaktionstemperaturen

– hoher stöchiometrischer Endausbrand bzw. Redoxreaktion der Schadstoffe, begründet auf die intensive Vermischung der Reaktionskomponenten durch die wellenförmige, scherenförmige und gegenläufige Vermischungswirbelung, entscheidend beitragend für eine schnelle und vollständige Schadstoffumsetzung,

– keine Beladung mit zusätzlicher Frischluft im Hauptbetrieb.d.h.,der Sauerstoff für die Redoxreaktionen wird im Abgas selbst entnommen,

– die "Heißkernzone " wird im zentralen Reaktorraum direkt mit dem Abgasmedium selbst gebildet;die wirkungsvolle Kernzone füllt den ganzen Umsetzungsquerschnitt aus,dadurch kann kein Schadstoffmolekül der Umsetzung entgehen. Verstärkt wird dieser Vorgang durch die Kopplungsströme gemäß technischer Anordnung fließender magnetischer Kraftströme in "stehender Welle",d.h., hochangeregter atomarer Zustände, in denen pondomotorische Kräfte auftreten durch bereits erwähnte elektrische Verschiebungsströme.

Durch diese Art der Führung "offener Leitungsströme" in Form "stehender Wellen", wird die "Stromschleife" um die Magnetlinien in zwei gleiche Teile geteilt, die in entgegengesetztem Sinne vom entstehenden "offenen" Strom umflossen-und der wiederum durch die Verschiebungsströme - geschlossen wird, so daß die "Polflächen" entgegengesetzte Vorzeichen haben(Punktladungen).

Das bedeutet, daß der Druck in den "Knoten" - wo die "Stromkreuzung" am intensivsten stattfindet - dieser elektrodynamisch erheblich gesteigert wird:Weil an diesen Knotenpunkten der größte Teil der Kraftlinien beide "Leiter" zugleich umschlingt, entsteht in Richtung der Kraftlinien eine Zugspannung, die beide "Leiter" momentan zueinander bewegt.In diesen Bereichen steigen Quantensprünge merklich an. Diese dynamische Kopplung beider elektromagnetischer Kraftfelder bewirkt eine sehr schnelle Steigerung der a) magnetischen Energiedichte (Hi) und b) der elektrischen Energiedichte(V/s) der Verschiebungsströme, zugleich additive adiabacische Energiezufuhr;

– das Betriebsverhalten ist deshalb unproblematisch, da das Reaktorsystem jede Volumenschwankung ohne Ausbrand-bzw, Umsatzeinbußen erfaßt. Es wird eine gleichbleibende Umsatzdichte erzielt,

– ferner eine kurze Systemanspringzeit; daher keine Energieverluste;

– kleine Baugröße,d.h. wenig Platzbedarf. Größtmögliche Abgasmengen werden auf kleinstem Raum gereinigt = hohe Schadstoffumsetzungsdichte;

– gleichzeitige Umsetzung aller gasförmigen und feinstrukturierten Partikelrückstände.

– Der Verzehr der qualitativen und quantitativen zylindrischen Schallenergie durch Umwandlung in Wärme (Entropie), verringert den bisherigen Umfang an Schalldämpfungsgeometrie erheblich.Der Kostenvorteil kommt dem additiven Reaktor zugute.

– Der praktisch fehlende Widerstand in der Abgasstrecke fördert die motorische Gaswechselarbeit.

Soweit Schallrestdämpfung je nach Motorsystem noch erforderlich, erfolgt diese durch Restverzehr an einigen Beugungsgittern der "Bessel-Funktion 1.Ordnung", die in die Abgasstrecke (ZA 33) eingebaut werden. Der Schallverzehr nach dieser Funktion gehört in diesen Zusammenhang der Emissionseliminierung, da die ankommende Wellenstrahlung nach dem Verständnis der dargelegten Wirkungsabstimmungen der Bessel-Funktion optimal entspricht. Hier sind keine Knallwellenkontiniums mehr zu reduzieren,sondern nur noch höherfrequente sinusförmige Energie, deren Wellenlängen sich nach dem dargelegten Hygenschen Prinzip(vgl. Zeichnung Blatt C-Fig. 8 und Zeichnung Blatt e -Fig.17) behandeln lassen.

Wenn solche Wellen auf die dünnen flächigen Gitter mit gestuften runden Löchern auftreffen, breiten sich die durch die Öffnungen hindurchgekenden Wellen fächerartig auseinander, sodaß die Energie sich ungleichmäßig verteilt und mit zunehmendem Beugungswinkel abnimmt.

(Vgl. Zeichnung Blatt E - Fig. 18 und 19).

Diese Darlegungen wesentlicher Einzelheiten des additiven Reaktorverfahrens machen die zusammenhängenden Funktionsglieder wie die beispielhafte Gesamtfunktion deutlich. Die umfangreiche systemdurchdringende Darlegung der Schadgasprobleme und der Energieverschwendung zugleich aus moderner physikalischer Sicht sowie der sich daraus ableitenden Möglichkeiten von Lösungen in der Energietechnik scheint deshalb angebracht, weil eine solche grundlegende Neuentwicklung infolge der fast unübersehbaren Differenzierungen alter Ausführungsformen, eine besonders präzise Unterbreitung zum Verständnis technischer-innovativer Handlungen vorweisen soll, zumal die Systementwicklung aus der vielschichtigen Prüfung von Einzelproblemen in Ulcraschalltechnik, elektromagnetischer Zusammenhänge, mikrophysikalischer Prozesse und Werkstofffragen, außerdem in der Zusammenarbeit mit Motorfachleuten und in der Befassung mit Vor-und Nachteilen energietechnischer Anwendungsverfahrenund Prozesse - im besonderen Hinblick auf die Behandlung bisher unvermeidbar erzeugter Schadgase aus grundsätzlich vermeidbarer Kompromißtechnik - seine Substanz bezieht.

Wie aus den Darlegungen erkenntlich, können bei aller Komplexität, mit einer relativ einfachen und kostengünstigen Abgas-Behandlungs-Vorrichtung in Verbindung mit einem miniaturisierten Prozessor, in Verbindung mit einfachem billigen Kleinkompressor, in Verbindung mit einfachen billigen US-Generatoren, in Verbindung mit kostengünstigen, einfachen elektrotechnischen Spulenelementen, in Verbindung mit einem (motorseitig vorhandenen) Stromerzeuger +Stromwechselrichter + einer kleinerer Kondensatorbatterie, in einem billigen Ganzstahl-Kammersystem -massenkaltverformbar -durch Umwandlung explosiver motorischer Knallwellen in hochverdichtende Kompressionswellen, ergänzt durch separate Ultraschallwellen und mit additiven elektromagnetischen Wechselwirkungen, annähernd restlos verbrennungsmotorische Prozeßabfallgifte einschließlich der schädlichen Lärmquelle beseitigt werden.

Die Wirtschaftlichkeit und Nützlichkeit des Verfahrens steht anderen Verfahren, die bisher bekannt sind, unter Beachtung der vorliegenden erfindungsgemäßen Lehre, in keiner Weise nach.

Es weist vielmehr diesen gegenüber in der technischen und wirtschaftlichen Gesamtnutzung deutliche und einmalige Vorteile auf, die das Verfahren zusätzlich als Spektruminnovation kennzeichnen.

Fachliche Systembezeichnung: ADDITIV-REAKTOR.

Liste zur Gesamtzeichnung:

Zeichnung A

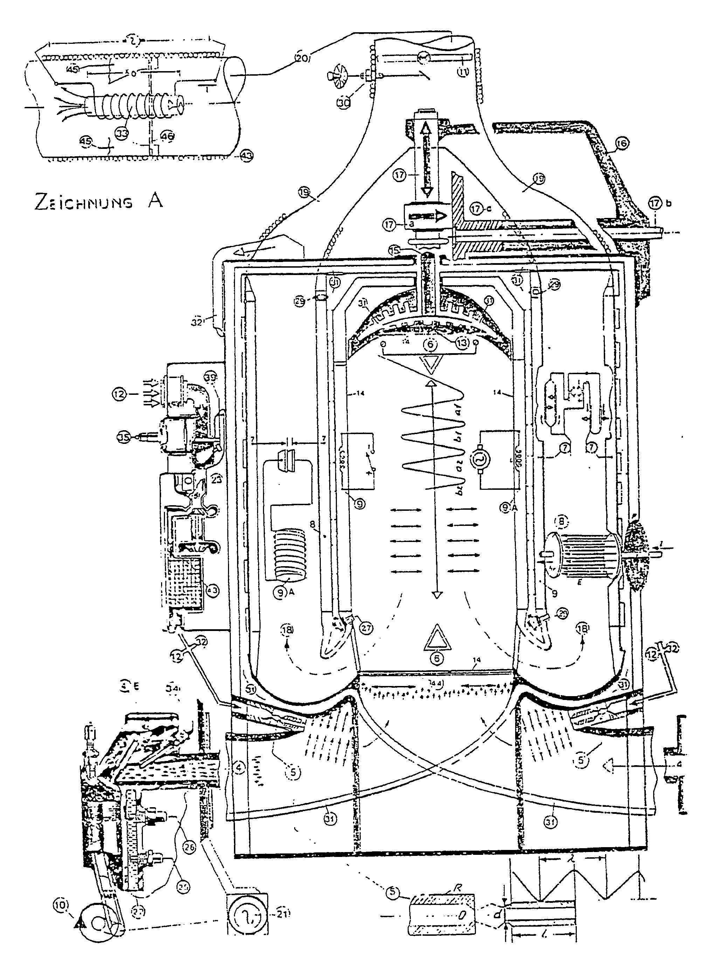

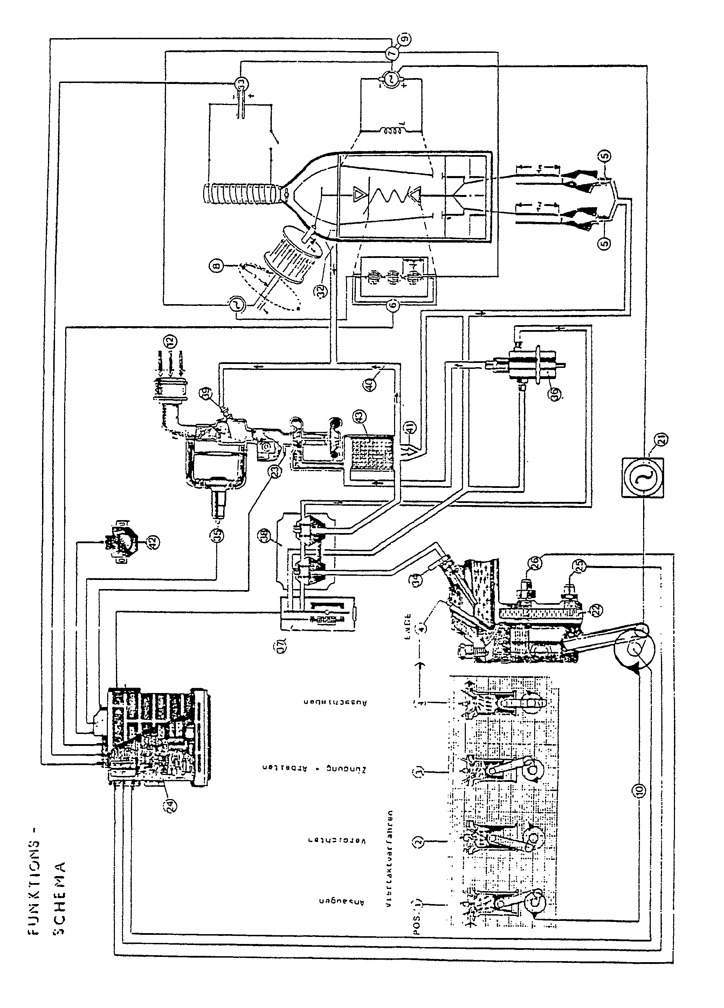

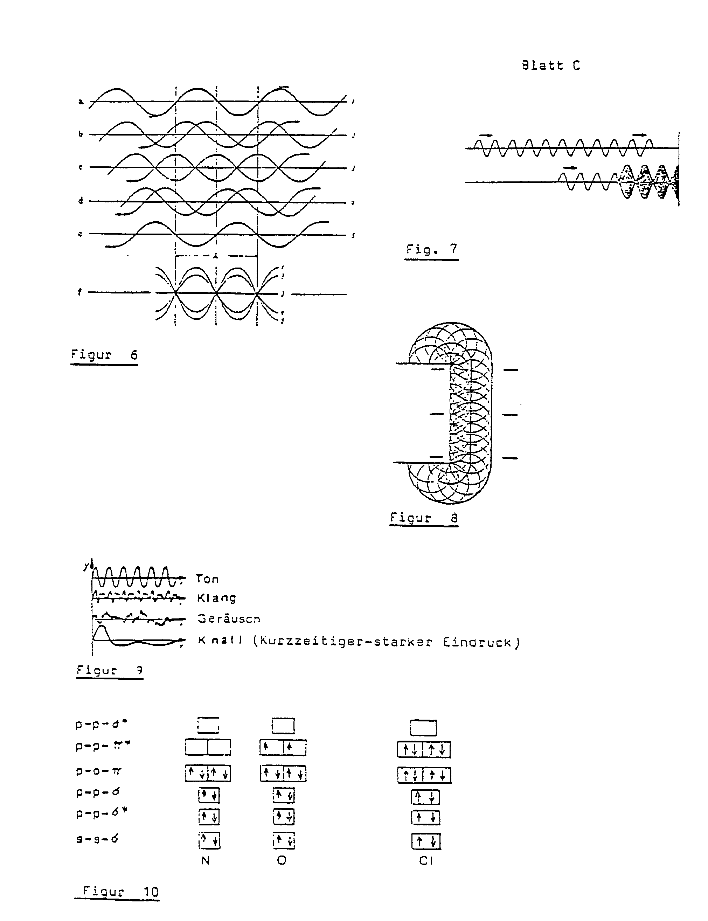

Blatt B-Fig. 1 bis 5

Blatt C-Fig. 6 bis 10

Blatt D-Fig. 11 bis 13

Blatt D-Fig. 16 bis 22

und Funktionsschema

Es zeigt

Zeichnung A : Den Additiv-Reaktor insgesamt

Fig. 1 : Den Energieniveauschema zur p-p-$\pi$- und p-p-$\pi^*$-Bindung

Fig. 2 : Das NO-Gleichgewicht in Temperaturabhängigkeit

Fig. 3 : Wellenförmig bewegte elektrische Ladungen im magnetischen Feld

Fig. 4 : Elektronenbahnen im homogenen longitudinalen Magnetfeld

Fig. 5 : Elektronenbahnen im inhomogenen longitudinalen Magnetfeld

Fig. 6 : Bildung stehender Wellen

Fig. 7 : Stehende Welle bei Reflexion an einer Grenzwand

Fig. 8 : Wellenflächenbildung aus Elementarwellen nach Huygens

Fig. 9 : Physikalischer Aufbau von Wellenformen

Fig. 10 : Bindende und lockernde Molekülorbitale von Stickstoff, Sauerstoff und Chlor

Fig. 11 : Erzeugung oszillierender elektrischer Wechselfelder

Fig. 12 : Magnetfeld eines Verschiebungsstromes und Verkettung elektrischer und magnetischer Wechselfelder

Fig. 13 : Entstehung eines elektrischen Wirbelfeldes durch ein sich änderndes Magnetfeld

Fig. 14 : freigelassen

Fig. 15 : freigelassen

Fig. 16 : Kegelstumpf mit innerem Kreiskegel

Fig. 17 : Beugung(Huygensches Prinzip)

```
Fig. 18 :⎫
           ⎬  Besselfunktion 1. Ordnung
Fig. 19 :⎭
```

Fig. 20 : Gleichgewicht, stabiles

Fig. 21 : Gleichgewicht, labiles

Fig. 22 : Gleichgewicht, indifferentes

Das Funktionsschema : Das Additiv-Reaktor in seiner funktionalen Verbindung mit einem Verbrennungsmotor

Anlagen : 6 Zeichnungsblätter

## Patentansprüche

1. Verfahren zur Beseitigung von Schadstoffen im Abgas von Verbrennungskraftmaschinen, bei dem das Abgas aus den Verbrennungsräumen des Motors über eine kurze Wegstrecke in einen oder mehrere Nachbehandlungsräume, die einen Hauptreaktionsraum und gegebenenfalls Nebenreaktionsräume umfassen, geleitet wird, wo Schadstoffe durch Nachreaktionen in unschädliche Stoffe umgewandelt werden, und bei dem die Energie der Knall- oder Stoßwellen aus dem Motor zur Erhöhung des Energieinhaltes des Abgases verwendet wird, **dadurch gekennzeichnet,** daß das im wesentlichen in longitudinaler Richtung in den Hauptreaktionsraum der Nachbehandlungseinrichtung einströmende Abgas durch eine in longitudinaler Richtung bewegliche Grenzfläche abrupt abgebremst wird, und nach Reflexion an dieser Grenzfläche und anschließender Reflexion an einer dieser Grenzfläche gegenüberliegenden Reflexionsfläche, die Teil eines Rückschlagventils ist, mehrfach reflektiert wird, um eine stehende Welle in dem Hauptreaktionsraum auszubilden, wobei die geometrischen Bedingungen, d.h. die Länge des Resonatorraumes für die stehende Welle, den Änderungen des Zustandes der Stoßwellen vom Motor angepaßt werden mit dem Ziel, die Energie der Knall- oder Stoßwelle vom Motor in Schwingungsenergie und Wärmeenergie umzuwandeln, wobei gegebenenfalls durch Ultraschall, elektrische und/oder magnetische Felder noch weitere Energie eingebracht wird, und im Takt des Abgasausstoßes vom Motor das während der Verweilzeit im Hauptreaktionsraum reagiert habende Gas ausströmen und neues Abgas durch das Rückschlagventil einströmen gelassen wird, wobei die erforderlichen Steuerungen für den thermodynamischen Reaktionsablauf und die geometrischen Bedingungen durch eine elektronische Prozeßsteuerung erfolgt.

2. Verfahren nach Anspruch 1, dadurch gekennzeichnet, daß die geometrische Bedingung für die stehende Welle in Abhängigkeit von der Entfernung vom Abgasauslaß, der durchschnittlichen Geschwindigkeit der Abgasströmung, dem durchschnittlichen Gasanfall und dem drehzahlbestimmten Energiestrom von den Zylindern des Motors und der Gesamtenergiebilanz der Abgase geregelt wird.

3. Verfahren nach Anspruch 1, dadurch gekennzeichnet, daß die geometrische Bemessung der Reaktionsstrecken und der Energiedurchsatz in diesen in Abhängigkeit von der Bedingung für die stehenden Wellen, der Entfernung von den Gasauslässen, der durchschnittlichen Geschwindigkeit der Abgasströmung, der durchschnittlichen Gasmengen, dem drehzahlbestimmten Energiestrom von den Zylindern des Motors, der Reaktionsenthalpie der Gase plus der Energien der induzierten Wechselwirkungen geregelt wird.

4. Verfahren nach Anspruch 1 oder 2, dadurch gekennzeichnet, daß das Rückschlagventil im Eingang zum Hauptreaktionsraum gleichzeitig mit der Ventilsteuerung der Zylinder geöffnet wird und ein Flatterventil im Auslaß vom Hauptreaktionsraum durch den Druckimpuls des ausströmenden Gases oder durch einen elektronischen Steuerimpuls geöffnet wird.

5. Verfahren nach Anspruch 1, dadurch gekennzeichnet, daß in der Einströmstrecke zum Hauptreaktionsraum Ultraschallwellen auf das Abgas einwirken gelassen werden, wodurch insbesondere in der Kaltstartphase und bei niedrigen Drehzahlen (Leerlauf) die Abgasreaktionen verbessert werden und bei Dieselmotoren Rußstoffe vorbehandelt oder gelockert werden.

6. Verfahren nach einem der Ansprüche 1 bis 5, dadurch gekennzeichnet, daß in der Kaltstartphase des Motors Frischluft in den Hauptreaktionsraum eingeführt wird, jedoch in der Warmlaufphase im wesentlichen keine Frischluft zugeführt wird, sodaß Frischluftmangel in den Dissoziationsphasen besteht.

7. Verfahren nach Anspruch 1, dadurch gekennzeichnet, daß die Temperatur im Hauptreaktionsraum und in Nebenreaktionsräumen durch ein Flüssigkeitsumlaufsystem und/oder durch Luftinjektion, einschließlich eingeblasener Frischluft, so geregelt wird, daß sie vorzugsweise im mittleren Bereich zwischen 500°C und 1000 °C liegt, und hinter den Nebenreaktionsräumen (Abströmbereich) in ein Temperaturgefälle in Verbindung mit einer Kühlung auf 500 °C und darunter gesenkt wird.

8. Verfahren nach Anspruch 1, dadurch gekennzeichnet, daß die zentrale Prozeßsteuerung auf optimale thermodynamische Gesamtwirkung unter Berücksichtigung von Kenngrößen des Motorregelsystems und elektrodynamischen und thermodynamischen sowie mechanischen und geometrischen Leistungs- und Wirkungsgrößen in der elektronischen Steuerung ausgelegt wird.

9. Verfahren nach Anspruch 1, dadurch gekennzeichnet, daß die zentrale Prozeßsteuerung auf Optimierung des Verhältnisses von Energie und Wirkungsgrad der Verbrennungskraftmaschine ausgelegt wird.

10. Verfahren nach Anspruch 1, dadurch gekennzeichnet, daß periodische elektromagnetische Wechselwirkungen zwischen den elektrisch geladenen Teilchen der Motoremissionsabgase, die sich bereits auf angeregten Energieniveaus befinden, erzeugt werden, um die Übergangswahrscheinlichkeit in den Dissoziationszustand zu erhöhen; daß die Induktion modulationsfähiger hochfrequenter magnetischer Wechselfelder durch Kopplung mit modulationsfähigen hochfrequenten stehenden Wellen im gemeinsamen Phasenraum unter Bildung echter elektrischer Verschiebungsströme zur rapiden Elektronenemission bewirkt wird; daß die Zustandsdichte durch ballistische und harmonische Pendelungen von Emissionsteilchen und Schwingungsphasen im Phasenraum optimiert wird; wobei die additive Kopplung der Wechselwirkungen den chemischen Umsätzen energetisch angepaßt ist, sodaß der "Knotendruck" in den Schalldruckwechselzonen sehr rapide ansteigt, weil in den Knotenpunkten der größte Teil der Kraftlinien die Bahnen bewegter positiver und bewegter negativer Teilchen zugleich umschlingt, und Quantensprüge bewirkt werden, durch die ein Photonenanstieg erfolgt, deren Strahlungsleistung durch geeignete räumliche und technische Verspiegelung Laserbildung ermöglicht.

11. Vorrichtung zur Durchführung des Verfahrens nach Anspruch 1 für die Beseitigung von Schadstoffen im Abgas von Verbrennungskraftmaschinen, bei der das Abgas aus den Verbrennungsräumen des Motors über eine kurze Wegstrecke in einen oder mehrere Nachbehandlungsräume geleitet wird, wo Schadstoffe durch Nachreaktionen in unschädliche Stoffe umgewandelt werden, und bei der die Energie der Knall- oder Stoßwellen aus dem Motor zur Erhöhung des Energieinhaltes des Abgases verwendet wird, **dadurch gekennzeichnet,** daß dem Motorverbrennungsraum eine Abgasnachbehandlungseinrichtung nachgeschaltet ist, die einen Hauptreaktionsraum (6-6) umfaßt, der dicht hinter dem Verbrennungsraum oder den Zylindern des Motors nach einem relativ kleinen Vorbehandlungsraum angeordnet ist und in Einströmrichtung des Abgases am hinteren Ende durch eine in longitudinaler Richtung bewegliche Prallwand (13) begrenzt wird, deren effektive Prallfläche sich im Zentrum des Hauptreaktionsraumes (6-6) befindet und kleiner als die gesamte Querschnittsfläche des Hauptreaktionsraumes ist, sodaß ein Abströmen von Gasen zwischen Prallfläche und der Wand des Hauptreaktionsraumes möglich ist, und an seinem strömungsseitigen Eingang, d.h. der Prallwand gegenüber, von einem Rückschlagventil mit zur Prallwand paralleler Oberfläche begrenzt wird, und daß dem Hauptreaktionsraum ein oder mehrere Nebenreaktionsräume (18) und ein Abströmbereich (19) folgen, denen sich der Endströmbereich anschließt.

12. Vorrichtung nach Anspruch 11, dadurch gekennzeichnet, daß die bewegliche Prallwand in der Mitte eine plane Grundfläche aufweist und ihr im Verhältnis zur mittigen Grundfläche deutlich kleinerer Randteil gewölbt ist, wobei die Oberfläche des Randteils eine parabolische Funktion ist.

13. Vorrichtung nach Anspruch 12, dadurch gekennzeichnet, daß das Randteil der Ausschnitt eines Rotationsparaboloids ist.

14. Vorrichtung nach Anspruch 11, dadurch gekennzeichnet, daß die bewegliche Prallwand (13) und die den Haupt- und Nebenreaktionsraum bzw. Nebenreaktionsräume umschließenden Elemente an ein Kühlmediumumlaufsystem (31) angeschlossen sind, das über Temperaturmeßfühler (27; 28) regelbar ist.

15. Vorrichtung nach Anspruch 11, dadurch gekennzeichnet, daß die Oberfläche der Prallwand eine sehr glatte, (laser-)gehärtete Oberfläche mit sehr feiner Materialkörnigkeit bei hochelastischem Untergrunmaterial ist und Spiegelgüte aufweist.

16. Vorrichtung nach Anspruch 15, dadurch gekennzeichnet, daß die Oberfläche der Prallwand eine korrosionsbeständige Schutzschicht aus dünnem, glattem und hochfestem Material besitzt.

17. Vorrichtung nach Anspruch 11, dadurch gekennzeichnet, daß der Hauptreaktionsraum als offene Magnetspule mit longitudinalem Magnetfeld ausgelegt ist.

18. Vorrichtung nach Anspruch 11, dadurch gekennzeichnet, daß in der Endströmstrecke eine Magnetspule, die ein axiales Magnetfeld erzeugt, sowie eine Einrichtung zur Erzeugurig eines elektrischen Feldes vorgesehen sind, wobei sich in der Spulenmitte ein Drahtleiter befindet, von dem bei angelegter elektrischer Spannung ein radiales elektrisches Feld ausgeht.

19. Vorrichtung nach Anspruch 11, dadurch gekennzeichnet, daß auf eine Frequenz bis etwa maximal 270 kHz abgestimmte offene Ultraschall-Hohlschwinggeneratoren (5) vorgesehen sind, die im Einströmbereich und/oder in Rohrwandnischen oder -ausbuchtungen eingelassen und im spitzen Winkel zur Gasströmung ausgerichtet sind.

20. Vorrichtung nach Anspruch 19, dadurch gekennzeichnet, daß bei einem Dieselmotor mehrere Ultraschallgeneratoren in Reihe oder sternförmig angeordnet und so in den Abgasbehandlungsraum gerichtet sind, daß die Ultraschallwellen feste Rußstruktureri auflockern können.

21. Vorrichtung nach Anspruch 11 zur Durchführung des Verfahrens nach Anspruch 8, dadurch gekennzeichnet, daß ein zentraler Mikroprozessor vorgesehen ist, der auf optimale thermodynamische Gesamtwirkung unter Berücksichtigung von Kenngrößen des Motorregelsystems in Verbindung mit den elektrodynamischen und thermodynamischen sowie mechanischen und geometrischen Leistungs- und Wirkungsgrößen des Nachreaktionssystems durch vernetzte elektronische Kennfeldsteuerung ausgelegt ist.

22. Vorrichtung nach Anspruch 11, dadurch gekennzeichnet, daß der Abströmbereich (19) ein Flatterventil (11) enthält, das den Weg in den Endströmbereich verschließt oder freigibt.

23. Vorrichtung nach Anspruch 11, dadurch gekennzeichnet, daß der Abströmbereich (19) diffusorähnlich ausgebildet ist.

24. Vorrichtung nach Anspruch 11, dadurch gekennzeichnet, daß der eine oder die Nebenreaktionsräume bezüglich des Hauptreaktionsraumes so angeordnet ist bzw. sind, daß darin die Gasströmung entgegengesetzt zur Gasstömung in dem Hauptreaktionsraum verläuft, wobei der bzw. die Nebenreaktionsräume einteilig oder mehrteilig ausgebildet sind.

25. Vorrichtung nach Anspruch 11, dadurch gekennzeichnet, daß der eine oder die als Reaktionsfolgestrecken dienenden Nebenreaktionsräume (18) richtungsungebunden mit dem Hauptreaktionsraum über Strömungspotentiale erzeugende Durchgangswege verbunden sind oder als Mehrraumfolgestrecken richtungsidentisch mit dem Hauptreaktionsraum verbunden und durchströmt sind.

26. Vorrichtung nach Anspruch 11, dadurch gekennzeichnet, daß

a) offene Magnetspule(n) für Haupt- und Nebenreaktionsräume und/oder

b) induktive Vorrichtungen als Leiter- oder Kondensatorplatten mit angelegten elektrischen Feldern zur Abgabe oszillierender elektromagnetischer Feldkräfte und/oder

c) elektromagnetische Induktivitäten als Wechselstrom-Schwingungskreise mit Resonanzfrequenz zur Abgabe von elektromagnetischer Wellenstrahlung (Raumwellen) in Verbindung mit Kondensatorbatterien mit Stoßerregung durch integrierte Löschfunkenstrecken und/oder

d) elektromagnetische Induktivitäten zur Induzierung einer Wechselspannung in voll- oder halbisolierten Reaktionsräumen mit außerhalb angeordneten Kondensatorplatten zur Abgabe oszillierender elektrischer Felder und/oder

e) in Reaktionsräumen angeordnete Paralleldrahtleitungen -als einseitig geschlossene Drahtsysteme (z.B. nach Lecher) -zur Abgabe longitudinaler elektromagnetischer geschlossener Felder und/oder

f) induktiv entgegengesetzt geladene Elektroden in Verbindung mit einem induktiven Magnetfeld zur Aufnahme verschiedener Ladungsteilchen im ionisierten strömenden Medium als Gleichstromquelle und/oder

g) offene Magnetspulen als Zugstrecke mit langgestreckter Spulensäule oder kreis- bzw. schneckenförmig mehrfach gewundener Spulenstrecke in Verbindung mit einer Rekombinationsbremse und/oder

h) offene Magnetspulen als gleichförmig gebildeter und justierter Kegelstumpf im Inneren und zu Beginn der Abström- oder Zugstrecke zur schrägen Anlenkung der Teilchen des strömenden Mediums bezüglich der Magnetfeldrichtung vorgesehen sind.

## Claims

1. A methlod of eliminating harmful substances from the exhaust gas from the combustion chambers of the engine is directed via a short path into one or a plurality of secondary treatment chambers which comprise a main reaction chamber and possibly subsidiary reaction chambers, where harmful substances or pollutants are converted by secondary reactions into harmless substances, and in which the energy of the detonation or shock waves from the engine is used to enhance the energy content of the exhaust gas, characterised in that the exhaust gas which flows in a substantially longitudinal direction into the main reaction chamber of the secondary treatment means is abruptly decelerated by a boundary surface adapted for movement in a longitudinal direction and, after being reflected by this boundary surface and subsequently being reflected on a reflection surface disposed opposite this boundary surface, and which is part of a non-return valve, is subjected to multiple reflection in order to construct a standing wave in the main reaction chamber, the geometrical conditions, i.e. the length of the resonator chamber for the standing wave, the variations in the state of the shock waves from the engine are adapted in order to convert the energy of the detonation or shock wave from the engine into oscillation energy and heat energy., still further energy possibly being incorporated by ultrasound, electrical and/or magnetic fields, and in time with the exhaust gas ejection from the engine the gas which will have reacted during the dwell time in the main reaction chamber is allowed to flow out and fresh exhaust gas allowed to flow in through the non-return valve, the necessary controls for the thermodynamic pattern of reaction and the geometrical conditions are provided by an electronic process control arrangement.

2. A method according to Claim 1, characterised in that the geometrical condition for the standing wave is regulated as a function of the remoteness from the exhaust gas outlet, the average velocity of the exhaust gas flow, the average amount of gas occurring and the rotary speed determined flow of energy from the cylinders of the engine and the overall energy balance of the exhaust gases.

3. A method according to Claim 1, characterised in that the geometrical dimensioning of the reaction paths on the throughput of energy in them are regulated by the condition for the standing waves, the remoteness from the gas outlets, the average velocity of the exhaust gas flow, the average quantities of gas, the rotary speed-determined energy flow from the cylinders of the engine, the reaction enthalpy of the gases plus the energies of the induced interactions.

4. A method according to Claim 1 or 2, characterised in that the non-return valve in the entrance to the main reaction chamber is opened simultaneously with operation of the cylinder valves and in that a choke poppet valve in the outlet to the main reaction chamber is opened by the pressure pulse of the emerging gas or by an electronic control pulse.

5. A method according to Claim 1, characterised in that in the inflow path to the main reaction chamber ultrasonic waves are allowed to act on the exhaust gas so that particularly in the cold starting phase and at low (idling) speeds, the exhaust gas reactions are improved and in the case of diesel engines sooty substances are pre-treated or loosened.

6. A method according to one of Claims 1 to 5, characterised in that in the cold starting phase of the engine fresh air is introduced into the main reaction chamber but in the hot running phase substantially non fresh air is supplied so that there is a shortage of fresh air in the dissociation phases.

7. A method according to Claim 1, characterised in that the temperature in the main reaction chamber and in secondary reaction chambers is so regulated by a liquid circulating system and/or by the injection of air, including injected fresh air, that it is preferably in the medium range between 500°C and 1000°C and after the subsidiary reaction chambers (outflow area) it is lowered in a temperature gradient to 500°C and below in conjuction with a cooling arrangement.

8. A method according to Claim 1, characterised in that the central process control is designed for optimum thermodynamic overall action, taking into account characteristic values of the engine control system and electrodynamic and thermodynamic as well as mechanical and geometrical output and effect magnitudes in the electronic control arrangement.

9. A method according to Claim 1, characterised in that the central process control is designed in order to optimise the proportion of energy to efficiency of the internal combustion engine.

10. A method according to Claim 1, characterised in that periodic electromagnetic interactions are created between the electrically charged particles of the engine emission exhaust gases which are already at a stimulated energy level, in order to increase the probability of a transition into the state of dissociation and in that the induction of modulable high frequency magnetic alternating fields is brought about by coupling with modulable high frequency standing waves in the common phase space, forming genuine electricl displacement cur-

EP 0 227 711 B1

rents for rapid electron emission, and in that the phase density is optimised by ballistic and harmonic 'hunting' of emission particles and oscillation phases in the phase space, the additive coupling of the interactions being adapted in terms of energy to the chemical changes so that the "nodal pressure" in the sound pressure zones rises very rapidly because in the nodal points the major part of the lines of force encircles the paths of moving positive and moving negative particles simultaneously and quantum jumps are brought about by which there is an increase in photons whose radiation output permits of laser formation by virtue of suitable spatial and technical metallisation.

11. An apparatus for carrying out the method according to Claim 1 for the elimination of pollutants from the exhaust gas from internal combustion engines in which the exhaust gas from the combustion chambers of the engine is directed via a short path into one or more secondary treatment chambers where pollutants are converted by secondary reactions into harmless substances, and in which the energy of the detonation or shock waves from the engine is used to enhance the energy content of the exhaust gas, characterised in that downstream of the engine combustion chamber is an exhaust gas secondary treatment means comprising a main reaction chamber (6-6) disposed closely behind the combustion chamber or the cylindres of the engine following a relatively small pre-treatment chamber and, in the direction of inflow of the exhaust gas it is bounded at the rear end by a longitudinally movable baffle wall (13), the effective baffle area of which is in the centre of the main reaction chamber (6-6) and is smaller than the overall cross-sectional area of the main reaction chamber so that an emission of gases between the baffle surface and the wall of the main reaction chamber is possible and at its flow-side inlet, i.e. opposite the baffle wall, it is bounded by a non-return valve having a surface parallel with the baffle wall, and in that the main reaction chamber is followed by one or a plurality of secondary reaction chambers (18) and an emission zone (19) adjacent to which there is the final flow zone.

12. An apparatus according to Claim 11, characterised in that the movable baffle wall has in the centre a flat basic area and in that its marginal part is markedly smaller in proportion to the central basic area and is curved, the surface of the marginal part having a parabolic function.

13. An apparatus according to Claim 12, characterised in that the marginal part is a cut-out from a paraboloid of rotation.

14. An apparatus according to Claim 11, characterised in that the movable baffle wall (13) and the elements enclosing the main and subsidiary reaction chamber or subsidiary reaction chambers are connected to a coolant circulation system (31) which can be regulated by temperature sensors (27, 28).

15. An apparatus according to Claim 11, characterised in that the surface of the baffle wall has a very smooth (laser) hardened surface of very finely-grained material backed by a high-resilience background material and in that it has mirror quality.

16. An apparatus according to Claim 15, characterised in that the surface of the baffle wall has a corrosion-resistant protective coating of thin, smooth and high-strength material.

17. An apparatus according to Claim 11, characterised in that the main reaction chamber is designed as an open magnetic coil with a longitudinal magnetic field.

18. An apparatus according to Claim 11, characterised in that in the final flow path there is a magnetic coil which generates an axial magnetic field, and a means of generating an electrical field, there being in the centre of the coil a wire conductor from which a radial electrical field emanates when an electric voltage is applied.

19. An apparatus according to Claim 11, characterised in that open ultrasonic hollow oscillation generators (5) are provided which are tuned to a frequency of up to a maximum of about 270 kHz and which are left into the inflow area and/or in crevices or depressions in the pipe wall and are orientated at an acute angle to the flow of gas.

20. An apparatus according to Claim 19, characterised in that in the case of a diesel engine a plurality of ultrasonic generators are disposed in series or in a stellate configuration and are so directed into the exhaust gas treatment chamber that the ultrasonic waves are able to loosen up any solid soot structures.

21. An apparatus according to Claim 11 for carrying out the method according to Claim 8, characterised in that a central microprocessor is provided which is designed for optimum thermodynamic overall effect, allowing for characterised values of the engine control system in conjuction with the electrodynamic and thermodynamic as well as mechanical and geometrical output and effect values of the secondary reaction system by cross-linked electronic characteristic field control.

22. An apparatus according to Claim 11, characterised in that the emission zone (19) comprises a choke valve (11) which occludes or opens up the path into the final flow zone.

23. An apparatus according to Claim 11, characterised in that the emission zone (19) is of diffusor-like construction.

24. An apparatus according to Claim 11, characterised in that the secondary reaction chambers(s) is/are so disposed in relation to the main reaction chamber that the gas flow in it extends in opposition to the gas flow in the main reaction chamber, the secondary reaction chamber(s) being constructed in one or a plurality of parts.

22

25. An apparatus according to Claim 11, characterised in that the secondary reaction chamber(s) (18) which serve as reaction sequence paths are directionally freely connected to the main reaction chamber via through-ways which generate flow potentials or as multi-chamber sequence paths are traversed by a flow and are connected directionally identically to the main reaction chamber.

26. An apparatus according to Claim 11, characterised in that

a) open magnetic coil(s) for main and secondary reaction chambers and/or

b) inductive devices as conductor or capacitor plates with applied electrical fields to emit oscillating electromagnetic field forces and/or

c) electromagnetic inductances as alternating current oscillating circuits with a resonance frequency to emit an electromagnetic wave radiation (spatial waves) in conjuction with capacitor banks with shock excitation by integrated quenched spark gaps and/or

d) electromagnetic inductances to induce an alternating current voltage in fully or semi-insulatted reaction spaces with externally disposed capacitor plates to emit oscillating electrical fields and/or

e) parallel wire conductors disposed in reaction chambers as unilaterally closed wire systems (e.g. Lecher type) - for emitting longitudinal electromagnetic closed fields and/or

f) inductively oppositely charged electrodes in conjuction with an inductive magnetic field to pick up various charge particles in the ionised flowing medium as a direct current source and/or

g) open magnetic coils as a draught path with elongated coil column or a circular or worm-like multi-wound coil path in conjuction with a recombination brake and/or

h) open magnetic coils as a uniformly formed and adjusted frustum in the interior and at the start of the outflow or draught path for oblique deflection of the particles of flowing medium in relation to the magnetic field direction are provided.


## Revendications

1. Procédé d'élimination de matières polluantes dans le gaz d'échappement de machines à combustion interne, dans le cas duquel le gaz d'échappement est envoyé, avec un trajet court, des enceintes de combustion du moteur vers une ou plusieurs enceintes de retraitement, comprenant une enceinte principale de réaction et, le cas échéant, plusieurs enceintes de réaction annexes, où les matières polluantes sont transformées, par des post-réactions, en matières non polluantes, et dans le cas duquel l'énergie des ondes d'explosion et des ondes de choc provenant du moteur est utilisée pour élever l'énergie interne du gaz d'échappement, caractérisé en ce que les gaz d'échappement arrivant, essentiellement suivant la direction longitudinale, dans l'enceinte principale de réaction sont freinés brutalement par une surface de délimination mobile suivant la direction longitudinale, et, après réflection sur cette surface de délimination et une réflection, qui lui fait suite, sur une surface réfléchissante située en face de cette surface de délimitation, qui est elle-même une partie d'un clapet anti-retour, sont réfléchis plusieurs fois pour réaliser, dans l'enceinte principale de réaction, une onde stationnaire, étant entendu que les conditions géométriques, c'est-à-dire la longueur de l'enceinte de résonnance pour l'onde stationnaire, sont adaptées aux modifications d'état des ondes de choc provenant du moteur, avec pour but de transformer l'énergie des ondes d'explosion et des ondes de choc provenant du moteur en énergie vibratoire et en énergie calorifique, avec, le cas échéant, apport d'énergie supplémentaire par des ultrasons, par des champs électriques ou par des champs magnétiques, et en ce qu'à la cadence de sortie des gaz d'échappement du moteur, on chasse les gaz ayant réagi pendant la période de stationnement dans l'enceinte principale de réaction et qu'on fait entrer un nouveau gaz par le clapet anti-retour, étant entendu que les commandes nécessaires pour le déroulement de la réaction thermodynamique et pour la détérioration des conditions géométriques se font au moyen d'un commande électronique de processus.

2. Procédé suivant la revendication 1, caractérisé en ce que les conditions géométriques pour l'onde stationnaire sont déterminées en fonction de la distance de le sortie des gaz d'échappement, de la vitesse moyenne du courant de gaz d'échappement, de la quantité moyenne de gaz produite, et du flux énergétique venant des cylindres du moteur, et déterminé par la vitesse de rotation, et du bilan énergétique global des gaz d'échappement.

3. Procédé suivant la revendication 1, caractérisé en ce que la dimension géométrique des zones de réaction et de la quantité d'énergie les traversant est régulée en fonction des conditions pour les ondes stationnaires, de la distance des sorties de gaz, de la vitesse moyenne du courant de gaz d'échappement, de la quantité moyenne de gaz, du flux énergétique, venant des cylindres du moteur et déterminé par la vitesse de rotation, de l'enthalpie de la réaction des gaz, plus l'énergie des interactions induites.

4. Procédé suivant la revendication 1 ou la revendication 2, caractérisé en ce que le clapet anti-retour, a l'entrée dans l'enceinte principale de réaction, est ouvert en même temps que la commande de soupape du cylindre et en ce qu'un clapet vibrant, à la sortie de l'enceinte principale de réaction, est ouvert par l'impulsion de pression du gaz sortant ou par une impulsion électronique de commande.

5. Procédé suivant la revendication 1, caractérisé en ce que, dans la zone d'entrée vers l'enceinte principale de réaction, on fait agir des ultrasons sur le gaz d'échappement, ce qui a pour effet d'améliorer les réactions du gaz d'échappement, en particulier, dans la phase de démarrage à froid et dans le cas des faibles vitesses de rotation (marche à vide), et, dans le cas des moteurs diesel, de traiter ou de bloquer les suies.

6. Procédé suivant l'une quelconque des revendications 1 à 5, caractérisé en ce que, dans la phase de démarrage à froid du moteur, de l'air frais est injecté dans l'enceinte principale de réaction, mais que dans la phase de fonctionnement à chaud, on n'envoie essentiellement aucun air frais, de telle façon qu'il y a un déficit en air frais au cours des phases de dissociation.

7. Procédé suivant la revendication 1, caractérisé en ce que la température dans l'enceinte principale de réaction et dans les enceintes de réaction annexes est régulée par un système de circulation de fluide et/ou par injection d'air, y compris d'air frais injecté, de telle façon qu'elle se trouve, de préférence, dans une zone moyenne comprise entre 500°C et 1000°C, et qu'après les enceintes de réaction annexes (zone d'échappement), elle soit abaissée, au cours d'une chute de température en liaison avec un refroidissement, à 500°C et moins.

8. Procédé suivant la revendication 1, caractérisé en ce que la commande centralisée de processus est réglée, dans la commande électronique, sur un effet global thermodynamique optimal, en fonction de grandeurs caractéristiques du système de régulation du moteur et de grandeurs électrodynamiques, thermodynamiques, ainsi que mécaniques et géométriques, de puissance et de rendement.

9. Procédé suivant la revendication 1, caractérisé en ce que la commande centralisée de processus est réglée sur une optimisation des caractéristiques d'énergie et de rendement du moteur à combustion interne.

10. Procédé suivant la revendication 1, caractérisé en ce que des interactions électromagnétiques périodiques entre les particules chargées électriquement provenant des gaz d'échappement émis par le moteur et se trouvant précisément à un niveau énergétique stimulé, sont provoquées pour augmenter la probabilité de leur passage à l'état dissocié; en ce que l'induction des champs magnétiques alternatifs à haute fréquence, modulables, est activée par couplage avec des ondes stationnaires à haute fréquence, modulables, au cours d'une partie de phase commune, avec formation de véritables courants électriques de déplacement pour émission rapide d'électrons; en ce que la densité d'état est rendue optimale par des oscillations balistiques et harmoniques de particules émises et des phases de vibration dans le volume de phase, étant entendu que le couplage additif des interactions est ajusté aux échanges chimiques, de telle façon que la "pression aux noeuds", dans les zones de variations de la pression acoustique, monte très rapidement, du fait qu'aux endroits des noeuds, la plus grande partie des lignes de force enveloppe à la fois les trajectoires des particules positives en mouvement et des particules négatives en mouvement, et que des discontinuités quantiques sont provoquées, par lesquelles il se produit une augmentation des photons dont l'effet de rayonnement permet la formation d'un laser, au moyen d'un jeu de couches réfléchissantes appropriées techniquement et géométriquement.

11. Dispositif pour la mise en oeuvre du procédé de la revendication 1, pour l'élimination de matières polluantes dans le gaz d'échappement de machines à combustion interne, dans le cas duquel le gaz d'échappement est envoyé, par un trajet court, des enceintes de combustion du moteur vers une ou plusieurs enceintes de retraitement, comprenant une enceinte principale de réaction et, le cas échéant, plusieurs enceintes de réaction annexes, où les matières polluantes sont transformées, par des post-réactions, en matières non polluantes, et dans le cas duquel l'énergie des ondes d'explosion et des ondes de choc provenant du moteur est utilisée pour élever l'énergie interne du gaz d'échappement, caractérisé en ce qu'on raccorde, après l'enceinte de combustion du moteur, un dispositif de retraitement des gaz d'échappement comportant une enceinte principale de réaction (6 - 6), qui est située directement après l'enceinte de combustion du moteur, ou les cylindres du moteur, après une enceinte relativement petite de prétraitement, et qui est délimitée, dans le sens d'entrée du gaz d'échappement, à l'extrémité arrière, par une paroi de choc (13), mobile suivant la direction longitudinale, dont la surface de choc effective se trouve au centre de l'enceinte principale de réaction (6 - 6) est plus petite que la surface totale de la section de l'enceinte principale de réaction, de telle façon qu'il peut se produire un échappement de gaz entre la surface de choc et la paroi de l'enceinte principale de réaction, et qui, du côté entrée du courant de gaz, c'est-à-dire du côté opposé à la paroi de choc, est délimitée par un clapet anti-retour comportant une surface extérieure parallèle à la paroi de choc, et en ce que l'enceinte principale de réaction est suivie d'une ou plusieurs enceintes de réaction annexes (18) et d'une zone d'échappement (19) à laquelle se raccorde la zone finale de sortie.

12. Dispositif suivant la revendication 11, caractérisé en ce que la paroi de choc mobile présente, en son centre, une surface de base plane et une zone de bordure, nettement plus petite par rapport à la surface de base centrale, courbée, étant entendu que la surface supérieure de la zone de bordure suit une fonction parabolique.

13. Dispositif suivant la revendication 12, caractérisé en ce que la zone de bordure est une partie d'un parboloïde de révolution.

14. Dispositif suivant la revendication 11, caractérisé en ce que la paroi de choc mobile (13) et les organes entourant l'enceinte principale de réaction, et la ou les enceintes de réaction annexes, sont raccordés à un système de refroidissement par circulation de fluide (31), qui est régulé par des détecteurs de température (27, 28).

15. Dispositif suivant la revendication 11, caractérisé en ce que la surface supérieure de la paroi de choc est une surface supérieure très polie et rendue résistance (au laser), comportant une manière à grain très fin avec une base en matière à haute élasticité, et présente des propriétés réfléchissantes.

16. Dispositif suivant la revendication 15, caractérisé en ce que la surface supérieure de la paroi de choc possède une couche de protection résistant à la corrosion, constituée d'une matière fine, polie et à haute résistance.

17. Dispositif suivant la revendication 11, caractérisé en ce que l'enceinte principale de réaction est conçue sous la forme d'une bobine magnétique ouverte, avec un champ magnétique longitudinal.

18. Dispositif suivant la revendication 11, caractérisé en ce que, dans la zone finale de sortie, sont prévus une bobine magnétique, créant un champ magnétique axial, ainsi qu'un dispositif pour la création d'un champ électrique, étant entendu qu'il se trouve au centre de la bobine un fil conducteur par lequel se produit, en appliquant une tension électrique, un champ électrique radial.

19. Dispositif suivant la revendication 11, caractérisé en ce que sont prévus des générateurs d'ultrasons à chambre de résonance ouverts (5), déterminés pour une fréquence allant jusqu'à environ 270 kHz au maximum, ces générateurs étant introduits dans la zone finale de sortie, et/ou dans des niches tubulaires ou dans des évidements et étant disposés en formant un angle aigu avec le courant gazeux.

20. Dispositif suivant la revendication 19, caractérisé en ce que, dans le cas d'un moteur diesel, plusieurs générateurs d'ultrasons sont disposés en série ou en étoile, et sont orientés de telle façon, dans l'enceinte de retraitement des gaz d'échappement, que les ondes ultrasonores peuvent désagréger des structures compactes de suie.

21. Dispositif suivant la revendication 11 pour la mise en oeuvre du procédé suivant la revendication 8, caractérisé en ce qu'il est prévu un microprocesseur central qui est réglé sur un effet global thermodynamique optimal, en fonction de grandeurs caractéristiques du système de régulation du moteur, et en liaison avec les grandeurs électrodynamiques, thermidynamiques, mécaniques et géométriques de puissance et de rendement du système de post-réaction, au moyen d'un réseau de commande électronique de champs.

22. Dispositif suivant la revendication 11, caractérisé en ce que la zone d'échappement (19) contient une soupape battante (11) qui ferme ou ouvre le passage vers la zone finale de sortie.

23. Dispositif suivant la revendication 11, caractérisé en ce que la zone d'échappement (19) est réalisée sous la forme d'un diffuseur.

24. Dispositif suivant la revendication 11, caractérisé en ce que l'une des enceintes de réaction annexes, ou les enceintes de réaction annexes, est, ou sont, disposées par rapport l'enceinte principale de réaction de telle façon qu'à leur inférieur, l'écoulement du gaz se fasse à contre-courant de l'écoulement du gaz dans l'enceinte principale de réaction, étant entendu que la ou les enceintes de réaction annexes sont respectivement réalisées en une partie ou en plusieurs parties.

25. Dispositif suivant la revendication 11, caractérisé en ce que l'une des enceintes de réaction annexes, ou les enceintes de réaction annexes (18), servant de zones de post-réaction, sont raccordées, en étant libres en direction, avec l'enceinte principale de réaction, par l'intermédiaire de passage créant un potentiel de courant, ou bien sont raccordées avec l'enceinte principale de réaction, avec des directions identiques, sous la forme de zones d'une suite de plusieurs enceintes, et traversées par le courant.

26. Dispositif suivant la revendication 11, caractérisé en ce que sont prévus:

a) une ou des bobines magnétique pour l'enceinte principale de réaction et les enceintes de réaction annexes, et/ou

b) des dispositifs à induction sous la forme de plaques de conducteurs ou de condensateurs, avec des champs électriques associés, pour créer des forces de champs électromagnétiqes oscillantes, et/ou

c) des inductances électromagnétiques sous la forme de circuits oscillants à courant alternatif avec une fréquence de résonance pour créer un rayonnement d'ondes électromagnétiques (ondes dans l'espace), en liaison avec des batteries de condensateurs, avec excitation par chocs au moyen d'un éclateur à étincelles intégré, et/ou

d) des inductances électromagnétiques pour induire une tension alternative dans des enceintes de réaction, complètement ou semi-isolées, comportant des plaques de condensateur disposées à l'intérieur pour créer des champs électriques oscillants, et/ou

<div align="center">25</div>

e) des systèmes de fils conducteurs parallèles disposés dans des enceintes de réaction sous la forme de systèmes de fils fermés sur un côté (par exemple d'après Lecher) pour créer des champs électromagnétiques longitudinaux fermés, et/ou

f) des électrodes chargées inductivement en polarité opposée en liaison avec un champ magnétique inductif pour recevoir des particules de charge différente dans un médium ionisé circulant, sous la forme d'une source de courant continu, et/ou

g) des bobines magnétiques ouvertes sous la forme d'une zone d'accélération comportant une colonne de bobine longitudinale ou une zone de bobine en hélice ou circulaire, faisant plusieurs tours, en liaison avec un frein de recombinaison, et/ou

h) des bobines magnétiques ouvertes sous la forme d'un tronc de cône ajusté et réalisé avec la même forme à l'intérieur et au début de la zone d'échappement ou d'accélération pour dévier obliquement les particules du médium circulant par rapport à la direction du champ magnétique.

ZEICHNUNG A

Figur 1

Figur 2

Figur 3

Figur 4

Figur 5

Fig. 7

Figur 6

Figur 8

y

Ton

Klang

Geräuscn

Knall (Kurzzeitiger-starker Eindruck)

Figur 9

p-p-d*

p-p-π*

p-o-π

p-p-σ

p-p-σ*

s-s-σ

N          O          Cl

Figur 10

Figur 11

Figur 12

Figur 13

Figur 16

Figur 17

Figur 18

Figur 19

Fig. 20

Fig. 21

Fig. 22